# EUROPEAN PATENT SPECIFICATION

(11) **EP 4 314 623 B1**
(45) Date of publication and mention of the grant of the patent: **14.10.2026**
(21) Application number: 22776290.3
(22) Date of filing: 23.02.2022
(51) Int. Cl.: F17C 1/02, F17C 1/12, F17C 5/02

(54) **APPARATUS, SYSTEMS, AND METHODS FOR STORING AND TRANSPORTING COMPRESSED FLUIDS**
VORRICHTUNG, SYSTEME UND VERFAHREN ZUM LAGERN UND TRANSPORTIEREN VON KOMPRIMIERTEN FLUIDEN
APPAREIL, SYSTÈMES ET PROCÉDÉS DE STOCKAGE ET DE TRANSPORT DE FLUIDES COMPRIMÉS

(30) Priority: 22.03.2021 US 202117209116
(43) Date of publication of application: 07.02.2024
(73) Proprietor: ezNG Solutions, LLC, Houston TX 77042-3717 (US)
(72) Inventor: WHITE, Charles N., Houston, Texas 77042-3717 (US); MCCLURE, Scott C., Houston, Texas 77042-3717 (US)
(74) Representative: Lucas, Brian Ronald
(86) International application number: PCT/US2022/017511
(87) International publication number: WO 2022/203793

(56) References cited:
- GB-A- 2 089 014
- JP-A- 2007 205 470
- US-A- 4 946 056
- US-A- 5 577 630
- US-A- 5 577 630
- US-A1- 2008 209 918
- US-A1- 2014 103 046
- US-A1- 2019 128 476
- US-B2- 9 033 178

## Description

### BACKGROUND INFORMATION

### Technical Field

The present disclosure relates to an apparatus for storing and transporting moderately compressed fluids (esp., cold compressed fluids), and methods for fabricating or constructing the apparatus for storing and transporting same. More particularly, the present disclosure relates to containment systems comprised of an array of co-dependent storage cells within an insulated high integrity structural enclosure to create a composite tank for storage and, when desired, transport of fluids (a "composite tank").

### Background Art

As noted in U.S. Patent No. 9,033,178 B2, assigned to ezNG Solutions LLC, Houston, Texas, in the petroleum and chemical industries, it is customary to store liquids and the like within large tank structures which are typically exposed to the elements, both heat and cold. These storage tanks usually comprise steel or other metallic tank structures that by reason of being exposed to ambient or near ambient conditions and thermal loads must be provided with a suitable insulating material so that the products in storage within the tanks may be kept at the desired temperatures.

Various arrangements or systems have been provided in the past for storage of cold or even cryogenic fluids (usually, liquids or dense phase fluids) at modest or nearly ambient storage pressures. Even at these relatively low pressures, the cold fluids are typically stored in containers of circular cross-section to obtain a hoop stress condition that limits the wall thickness of the container. However, when the diameter of the container is large enough or the internal pressure high enough the required wall thickness can still be so large as to cause penalizing increases in cost of materials, welding, and fabrication. The concepts described in US 9,033,178 B2 for designing and using arrays of independent flat-sided storage cells that support each other within a structurally sound containment space provide the means for limiting the thickness of the walls of the containers and the resulting total cost of the storage apparatus. Using the concepts of US 9,033,178 B2, large storage tanks containing cold fluids under modest pressure can be designed and built at low cost compared to large diameter flat-bottom, bullet-type, or multi-lobe tanks of the same total internal storage capacity. However, these cellular arrays that comprise each storage tank still require a large amount of expensive wall material because the cellular array of cells with flat walls will typically have more surface area per unit of internal volume. Further, since the calculation of minimum wall thickness for the skin of the cells tends to be dominated by a specified internal design pressure, the minimum wall thickness needed to safely contain the specified pressure (under relevant pressure vessel design codes) can be quite small if the radii of the curved edges of the cells are small. In fact, the wall thickness for the skin of the cells may need to be specified to be much thicker than the minimum required to safely contain the specified pressure due to fabrication and handling considerations if the curved edge radii are small compared to the overall dimensions of the cells. In such cases, the excess wall thickness margin imposed due to fabrication and handling concerns diminishes the potential material cost savings provided by '178.

Each cell in the array comprising the primary containment of the composite storage tank requires access penetrations for fluid injection and withdrawal as well as for human or monitoring device access. Since a single tank described in US 9,033,178 B2 may be comprised of many cells, the cost of these accessways into and the conduits for fluid transfer interconnecting the cells to allow fluid transfer into or from the tank and to ensure that all cells comprising a tank are essentially pressure-balanced throughout become an important feature of total system pricing. In this disclosure, the fluid conduits may typically be referred to as pipes or as risers when oriented vertically, while a system of conduits may be referred to as piping or a piping system. Further, the external piping (i.e., conduits for interconnecting all the cells in the composite tank) includes many pipe-to-pipe connections from which the potential for leaks of hazardous fluid cargos represents real "risk costs" for owners/operators of storage systems incorporating the cellular array concepts of US 9,033,178 B2.

Therefore, it would be beneficial and an advance in the storage art for compressed fluids to provide apparatus, systems, and methods of fabricating and using same that limit the total amount of cell wall material as well as the quantity of accessways with penetrations and external piping connections required to complete a composite tank of any specified internal volume.

US 9,033,178 discloses a container having a pair of opposing heads, and a wall section between the heads has a square cross-section and planar side walls joined together by rounded corners. The side walls tend to deflect outwardly while under pressure, but are supported externally by a support system such as the walls of a cargo hold. A top piping manifold with valves provides fluid access to the top of the containers. Piping manifold riser represents a vertical riser pipe flow path connected to the bottom piping manifold for conveying fluids to/from the bottom connections of all four containers in a hold. US 4, 946, 056 discloses a small tank or vessel (10) for the containment of pressurized fluids comprising Y-sections together forming adjacent part cylinders with a septum in between provided with openings. US 5,577,630 discloses a pressure vessel for holding a pressurized fluid such as compressed natural gas includes two end cells and an interior cells with ports or transfer nozzle assembly therebetween. GB-A-2089014 discloses a storage tank with closing part-cylindrical lobes, and a separating plate is provided at each lobe connection to strengthen the tank against internal pressure, all of said plates defining an opening so that the tank provides a single storage compartment capable of storing liquid under pressure.

### SUMMARY

In accordance with the present disclosure, apparatus, systems, and methods of fabricating and using same are presented that overcome some or all of the deficiencies of previous designs. Making through-wall holes in some or all of adjacent flat wall panel portions of cells comprising the primary containment of the composite tank fluid containment system such as described in the '178 patent that are sealed along their perimeters to matching through-wall holes in adjacent cell walls allows reduction in the total amount of cell wall material and the quantity of external accessway penetrations and external piping system interconnections. Conventional engineering analysis will indicate how much wall material can be removed in the making of the through-wall holes as well as how much stiffening may be required around the edges of these holes to maintain structural stability during fabrication, handling, and operation.

A first aspect of the disclosure is a composite tank apparatus for fluid containment at pressures at or near ambient (i.e., less than about 1 barg or 14.5 psig) to moderate (typically, less than about 30 barg or 725 psig though it is theoretically possible to design for much higher pressures) comprising (or consisting essentially of, or consisting of):
a) an array of at least two flat-sided co-dependent cells with relatively thin skins (i.e., "cell walls") made of metallic (e.g., steel or aluminum alloys typically less than about 25.4mm or 1 inch and practically no more than 76.2mm or 3 inches thick) or non-metallic materials (e.g., fiber-impregnated artificial rubber sheet, fiber-resin matrix, or even ferro-cement materials) wherein each of the at least two flat-sided co-dependent cells has at least two flat wall panel portions connected by radiused sections arranged such that all of the flat wall panel portions of the at least two flat-sided co-dependent cells are either in flush contact with each other or in flush contact with flat supporting panels of an enclosing structure (or thermal insulating material lining an interior of the enclosing structure) enclosing the array of at least two flat-sided co-dependent cells, each of the at least two flat-sided co-dependent cells having a top and a bottom cap (sometimes referred to herein as top and bottom heads) connected respectively to top and bottom ends of the cell walls and radiused sections;
b) the at least two flat-sided co-dependent cells sealed with each other around a perimeter of at least one matching pair of lightening through-wall holes provided in adjacent pairs of the flush-contacting flat wall panel portions of the at least two flat-sided co-dependent cells in the composite tank, the perimeter of all the pairs of lightening through-wall holes sufficiently sealed to structurally resist relative movement and prevent leakage of fluid from containment (by, as for example, a continuous weldment joining the adjacent pairs of the flush-contacting flat wall panel portions);
c) the enclosing structure having an interior surface and an exterior surface, and a cover, the enclosing structure and cover configured to provide environmental isolation with sufficient structural strength and with sufficient rigidity to support exterior flat side panel portions of the at least two flat-sided co-dependent cells at exterior portions of the array of at least two flat-sided co-dependent cells, as disclosed further herein; and
d) optionally, one or more layers of thermally insulating material lining the interior surface or the exterior surface of the enclosing structure. If the contained fluid is to be stored in the composite tank at or near normal ambient temperatures, then insulation is unlikely to be required.

In certain embodiments, the composite tank is configured for storage of fluids that must be contained at temperatures at least 10°C different from normal ambient conditions. In such embodiments, thermal insulating layer or layers may be provided as part of the composite tank. In embodiments where the stored fluid is injected and intended to be stored at temperatures below about minus 40°C and the enclosing structure (e.g., bulkheads and decks or inner bottom of a ship) are made of non-cryogenic (mild or low alloy) steel, then the one or more layers of thermally insulating material should be designed and installed to establish a barrier to protect the steel enclosure from risk of brittle failure.

In certain embodiments, the composite tank apparatus comprises one or more fluid accessways, openings, or conduits for injection and withdrawal of fluids. In certain embodiments, the fluid accessways may comprise one or more conduits that penetrate into the top or bottom caps of one or more of the at least two flat-sided co-dependent cells comprising the composite tank apparatus to join with one or more manifolds that run horizontally within co-dependent cells and through adjacent interior walls of the array of the at least two flat-sided co-dependent cells allowing simultaneous injection and ejection (often called "withdrawal") of fluids.

Certain composite tank embodiments may comprise one or more top-mounted accessway fittings (as allowed by the ASME Pressure Vessel codes) to allow humans or non-human devices (e.g., autonomous or semi-autonomous drones) to gain access to an interior of one or more of the at least two flat-sided co-dependent cells for inspection, monitoring, and/or repair of the cells or interior conduits.

Certain composite tank embodiments may comprise one or more top-mounted accessway fittings comprising pressure-competent fluid conduits (i.e., pipe fittings as allowed by the ASME Pressure Vessel codes) to top caps of one or more of the co-dependent cells for the purpose of injecting fluids into or withdrawing fluids from the composite tank.

Certain composite tank embodiments may include bottom-mounted accessway fittings comprising pressure-competent fluid conduits (i.e., pipe fittings as allowed by the ASME Pressure Vessel codes) to bottom caps of one or more of the co-dependent cells for the purpose of injecting fluids into or withdrawing fluids from the composite tank.

Certain composite tank embodiments may include penetrations with such pressure-competent fittings on any of the radiused sections of any cell or exterior flat panels of the cells at ends of the array of co-dependent cells, although top accessways and top and bottom penetrations will provide more workable locations in most embodiments.

Certain system embodiments of the present disclosure may also include other features as described herein such as simplified arrangements of internally run interconnecting manifolds enabled by the inclusion of lightening through-wall holes across adjacent walls of the co-dependent cells comprising the composite tank apparatus.

A second aspect of the present disclosure are methods of making a substantially metallic composite tank system of the first aspect, comprising (or consisting essentially of, or consisting of):
a) providing a plurality of thin metallic flat wall panel portions, a plurality of metallic radiused sections (which will in certain embodiments incorporate narrow tangent edge portions to facilitate transition to and alignment with the edges of the flat panel portions), and a plurality of metallic top and bottom caps to produce at least two flat-sided co-dependent cells with relatively thin skins having a thickness ranging from about 5 to about 25mm, or from about 25 to about 75mm;
b) optionally providing one or more accessways where and as needed in the plurality of thin metallic flat wall panel portions;
c) optionally providing one or more penetrations where and as needed in the plurality of metallic top and bottom caps;
d) fastening (for example, by welding) the vertically running edges of the panel portions to the at least two radiused sections to form a plurality of cell bodies, and fastening (for example by welding) the plurality of metallic top and bottom caps to the plurality of cell bodies to form the at least two flat-sided co-dependent cells with relatively thin skins (as compared to the skin thickness of large diameter "bullet" tanks designed to carry the same internal storage volume and pressure);
e) arranging the at least two flat-sided co-dependent cells with relatively thin skins such that all of the flat wall panel portions of the at least two flat-sided co-dependent cells are either in flush contact with each other or in flush contact with flat supporting panels of an enclosing structure (or thermal insulating material lining an interior of the enclosing structure) to form an enclosed array of at least two flat-sided co-dependent cells;
f) sealing (by, as for example, a continuous weldment) the at least two flat-sided co-dependent cells with each other around a perimeter of at least one matching pair of lightening through-wall holes provided in adjacent pairs of the flush-contacting flat wall panel portions of the at least two flat-sided co-dependent cells in the composite tank, the perimeter of all the matching pairs of lightening through-wall holes sufficiently sealed to structurally resist relative movement and prevent leakage of fluid from containment; and
g) the enclosing structure having an interior surface and an exterior surface, and a cover, the enclosing structure and cover configured to provide environmental isolation with sufficient structural strength and with sufficient rigidity to support exterior flat side panel portions of the at least two flat-sided co-dependent cells at exterior portions of the array of at least two flat-sided co-dependent cells such that, when internal pressure is established within the array of at least two flat-sided co-dependent cells at a targeted level for operations or survival, the at least two flat-sided co-dependent cells of the array are prevented from expanding and displacing (to a degree that would generate unacceptable stresses or collapse according to current ASME Boiler and Pressure Vessel codes, for example, as discussed herein).

A third aspect of the present disclosure are methods of flowing (for example, injecting) fluid into and extracting (withdrawal) of the same or different fluid from tops and bottoms of the array of cells of the first aspect comprising the primary containment of a composite tank apparatus for fluid containment, the method comprising (or consisting essentially of, or consisting of):
(a) providing upper and lower horizontal fluid conducting manifolds that extend internally through paired through-wall holes in adjacent flat wall panel portions of all adjacent cells of the array of at least two flat-sided cells comprising the composite tank apparatus of the first aspect;
(b) providing a first plurality of risers (i.e., vertical fluid conduit segments) fluidly connected to and running from the upper horizontal fluid conducting manifold to near a top of each cell's top cap in the array of cells comprising said tank apparatus providing a flow path from the top of each cell into the upper horizontal fluid conducting manifold;
(c) providing a second plurality of risers fluidly connected to and running from the lower horizontal fluid conducting manifold to near a bottom of each cell bottom cap in the array of cells comprising the composite tank apparatus of the first aspect, providing a flow path from the bottom of each cell into the lower horizontal fluid conducting manifold;
(d) providing at least one third riser fluidly connected to and running from the upper horizontal fluid conducting manifold to and through an accessway fitting on the top cap or bottom cap of at least one of the cells in the array of cells comprising the composite tank apparatus; and
(e) providing at least one fourth riser fluidly connected to and running from the lower horizontal fluidly conducting manifiold to and through an accessway fitting on the top cap or bottom cap of at least one of the cells in the array of cells comprising the composite tank apparatus; and
(f) flowing a low density fluid of a first specified pressure and a first temperature into or out of an upper part of the composite tank apparatus of the first aspect through the at least one third riser while flowing a higher density fluid of the same or different chemical composition and of a second specified pressure and a second temperature simultaneously into or out of the bottom of the cells in the array of cells comprising the composite tank apparatus of the first aspect through the at least one fourth riser in a manner that allows a targeted pressure and temperature regime to be maintained within the composite tank apparatus.

These and other features of the composite fluid containment tank apparatus, systems, and methods in accordance with the present disclosure will become more apparent upon review of the brief description of the drawings, the detailed description, and the claims that follow. It should be understood that wherever the term "comprising" is used herein, whether describing an embodiment or a component or step of an embodiment, other alternative embodiments, components, and steps where the term "comprising" is substituted with "consisting essentially of" are explicitly disclosed herein. It should be further understood that wherever the term "comprising" is used herein, other alternative embodiments, components, and steps where the term "comprising" is substituted with "consisting of" are explicitly disclosed herein. Moreover, the use of negative limitations is specifically contemplated; for example, a composite tank of the present disclosure may comprise a number of physical components and features but may be devoid of certain optional hardware and/or other features. For example, certain systems of this disclosure may be devoid of weldments welded to the cells comprising a tank. Further, a component may be devoid of passages, cavities, slots, and the like, in other words, may be a solid piece. Certain system embodiments may be devoid of insulation material.

### BRIEF DESCRIPTION OF THE DRAWINGS

The manner in which the objectives of this disclosure and other desirable characteristics can be obtained is explained in the following description and attached drawings in which:

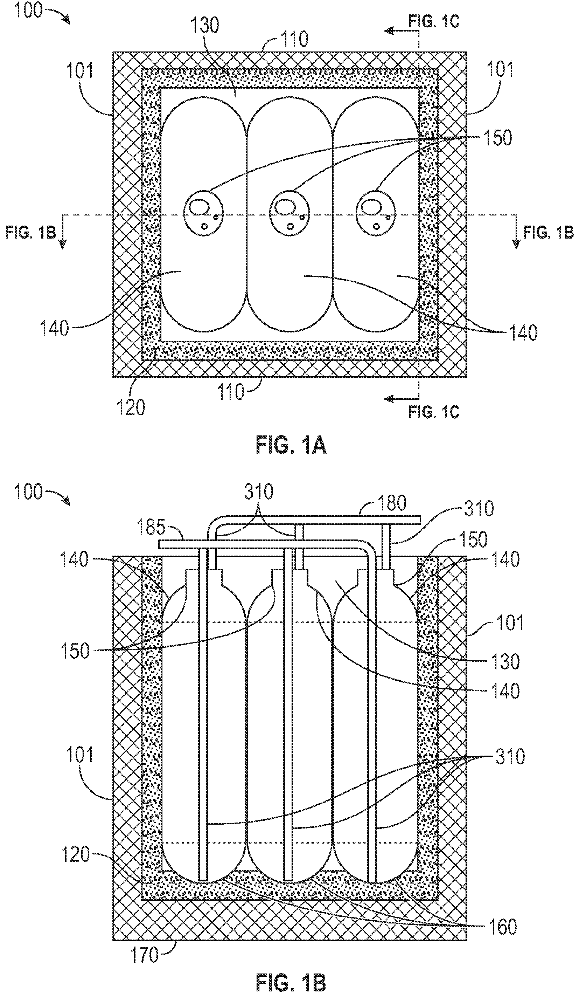

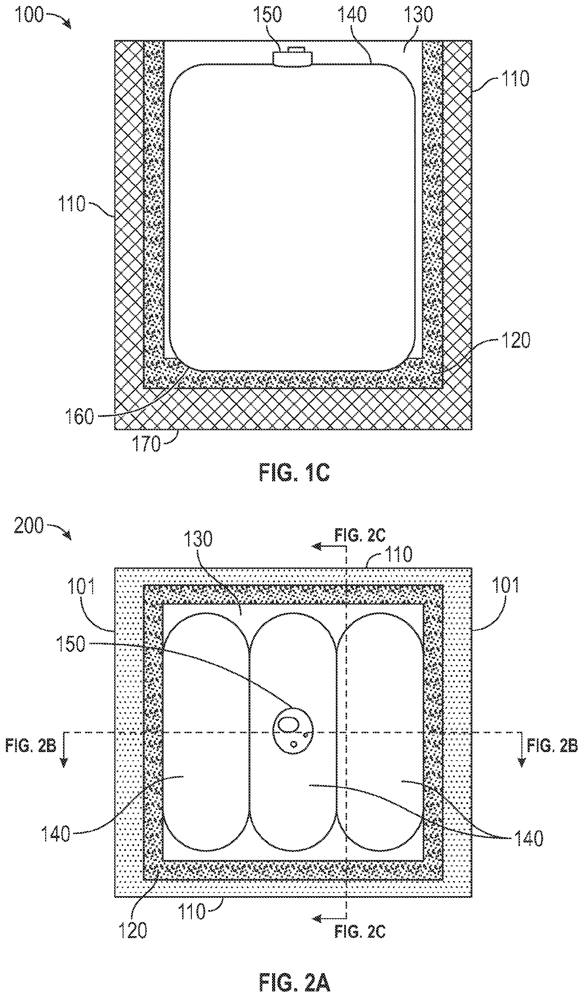

FIGS. 1A, 1B, and 1C schematically illustrate a three-cell cornposite tank apparatus as a basic form of the pressure-competent fluid containment tank apparatus disclosed in US 9,033,178 B2, wherein FIG. 1A is a schematic plan view, FIG. 1B is a schematic midway cross-sectional view, and FIG. 1C is a side elevation view of one of the two-sided flask cells within the tank's insulated structural enclosure;

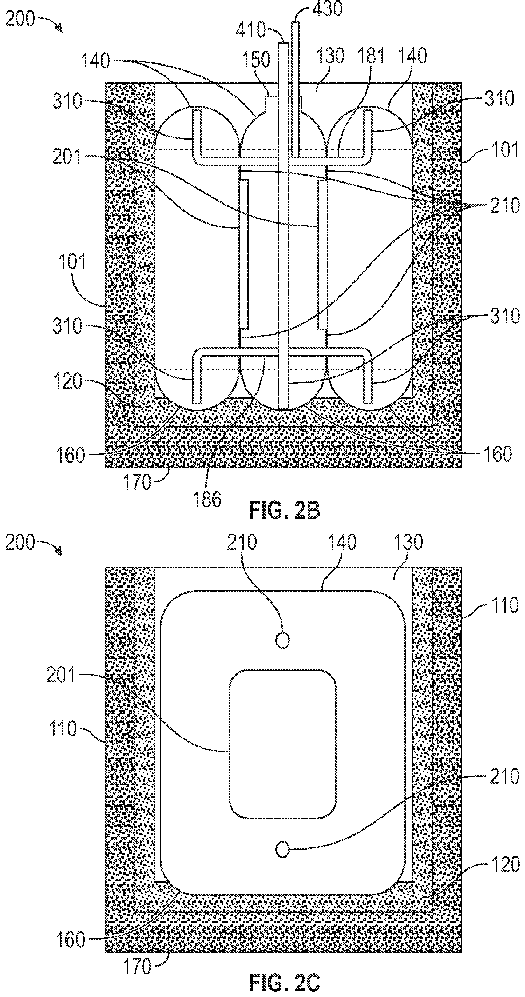

FIGS. 2A, 2B, and 2C schematically illustrate one embodiment of a composite tank apparatus with lightening holes provided in accordance with the present disclosure, wherein FIG. 2A is a schematic plan view, FIG. 2B is a schematic midway cross-sectional view, and FIG. 2C is a schematic side elevation view;

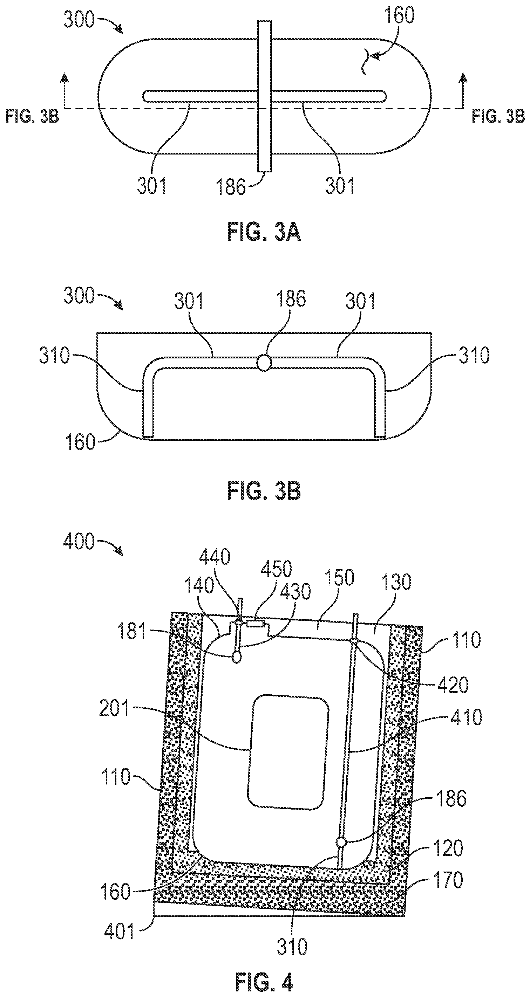

FIGS. 3A and 3B are schematic plan and cross-sectional views, respectively, illustrating one embodiment of a method for branching out the manifold arrangement to effectively drain outer portions of wide cells;
FIG. 4 is a schematic side elevation view, with parts broken away, illustrating how a bias can be permanently or temporarily imposed on the orientation of composite tanks of this disclosure to establish distinct high and low points in wide cells of such composite tanks to effectively drain the cells;

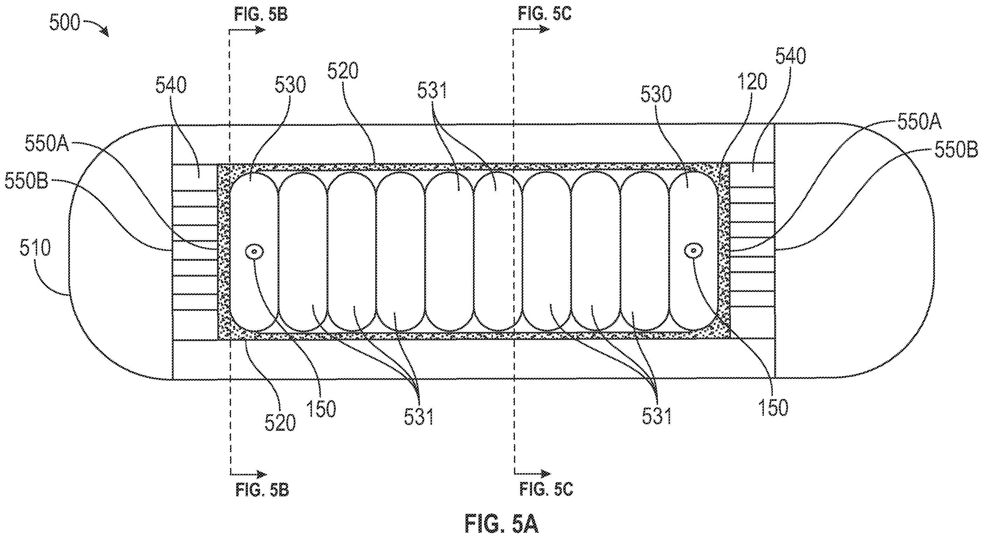

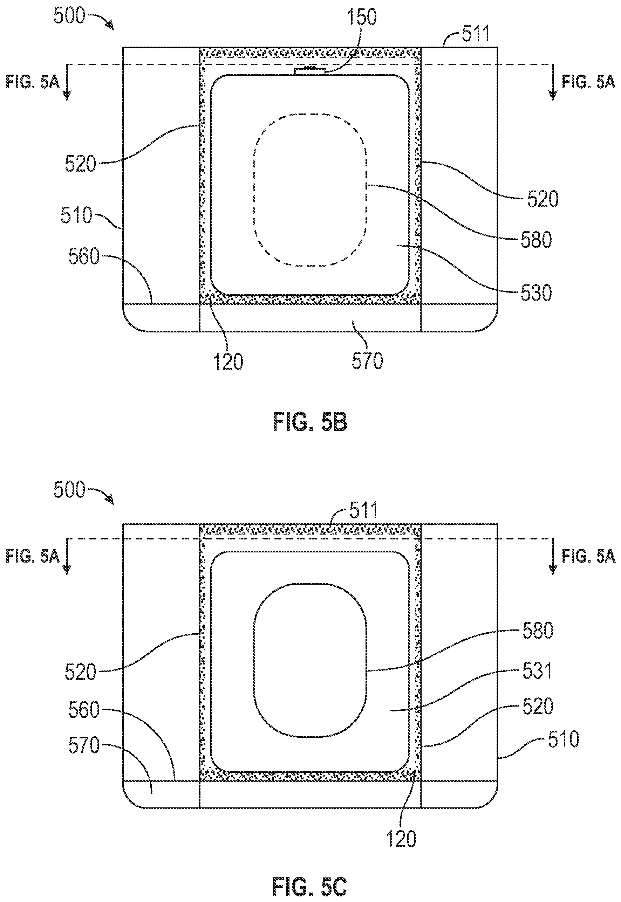

FIGS. 5A, 5B, and 5C schematically illustrate a multi-cell composite tank apparatus (comprised of ten two-sided cells) with through-wall lightening holes provided in adjacent flat wall panel portions of the co-dependent cells confined within an insulated hold of a marine vessel (ship or barge) according to one embodiment of the present disclosure, wherein FIG. 5A is a schematic plan view, FIG. 3B is a schematic side elevation view, and FIG. 5C is a schematic side elevation view (for clarity, none of the internal fluid conduits (piping manifolds and risers) are depicted in FIGS 5A-C);

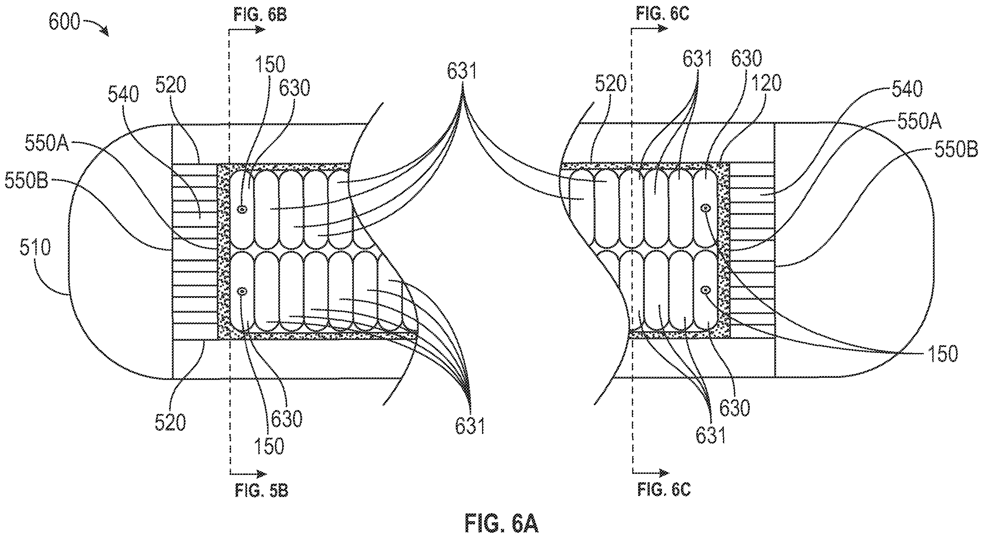

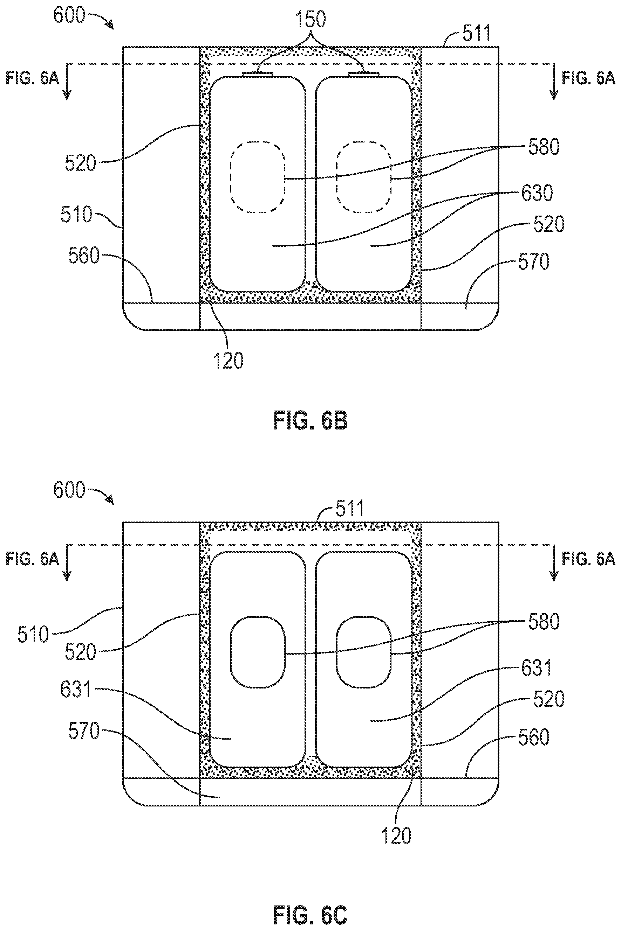

FIGS. 6A, 6B, and 6C schematically illustrate two multi-cell composite tank apparatus with through-wall lightening holes provided in accordance with the present disclosure, wherein FIG. 6A is a schematic plan view, FIG. 6B is a schematic side elevation view, and FIG. 6C is a schematic cross-sectional elevation view (for clarity, none of the internal fluid conduits (piping manifolds and risers) are depicted in FIGS. 6A-C);

It is to be noted, however, that the appended drawings of FIGS. 1A-C, 2A-C, 3A-B, 4 , 5A-C, and 6A-C may not be to scale and illustrate only typical apparatus and system embodiments of this disclosure. Furthermore, FIGS. 2A-6C illustrate only one of many possible embodiments of this disclosure that provide direct interconnectivity between the cells in a tank while reducing the total amount. of material required to manufacture the skins of the cells in accordance with the present disclosure. Therefore, the drawing figures are not to be considered limiting in scope, for the disclosure may admit to other equally effective embodiments.

### DETAILED DESCRIPTION

In the following description, details are set forth to provide an understanding of the disclosed fluid containment apparatus, systems, and methods. However, it will be understood by those skilled in the art that the apparatus, systems, and methods of the present disclosure may be practiced without these details and that numerous variations or modifications from the described embodiments may be possible.

As noted in the Background, using the concepts of US 9,033,178 B2, large storage tanks containing cold fluids under modest pressure can be designed and built at low cost compared to large diameter flat-bottom, bullet-type, or multi-lobe tanks of the same total internal storage capacity. However, these cellular arrays that comprise each storage tank still require a large amount of expensive wall material because the cellular array of cells with flat walls will typically have more surface area per unit of internal volume. Further, since the calculation of minimum wall thickness for the skin of the cells tends to be dominated by a specified internal design pressure, the minimum wall thickness needed to safely contain the specified pressure (under relevant pressure vessel design codes) can be quite small if the radii of the curved edges of the cells are small. In fact, the wall thickness for the skin of the cells may need to be specified to be much thicker than the minimum required to safely contain the specified pressure due to fabrication and handling considerations if the curved edge radii are small compared to the overall dimensions of the cells. In such cases, the excess wall thickness margin imposed due to fabrication and handling concerns diminishes the potential material cost savings provided by '178. Each cell in the array comprising the primary containment of the composite storage tank requires access penetrations for fluid injection and withdrawal as well as for human or monitoring device access. Since a single tank described in US 9,033,178 B2 may be comprised of many cells, the cost of these accessways into the cells and the externally running conduits for fluid transfer interconnecting the cells to allow fluid transfer into or from the tank and to ensure that all cells comprising a tank are essentially pressure-balanced throughout become an important feature of total system pricing. In this disclosure, the fluid conduits may typically be referred to as pipes or as risers when oriented vertically, while a system of conduits may be referred to as piping or a piping system. Further, the external piping (i.e., conduits for interconnecting all the cells in the composite tank) includes many pipe-to-pipe connections from which the potential for leaks of hazardous fluid cargos represents real "risk costs" for owners/operators of storage systems incorporating the cellular array concepts of US 9,033,178 B2.

The present disclosure provides apparatus, systems, and methods of fabricating and using same that limit the total amount of cell wall material as well as the quantity of accessways with penetrations and external piping connections required to complete a composite tank of any specified internal volume.

As noted in the Summary, a first aspect of the disclosure are composite tank apparatus for fluid containment at pressures at or near ambient (i.e., less than 1 barg) to moderate (typically, less than about 50 barg) pressures. A second aspect are methods of making such composite tank apparatus, and a third aspect are methods of using such composite tank apparatus.

In certain embodiments, the composite tank is intended for storage of fluids that must be contained at temperatures at least 10°C different from ambient conditions. In such cases, insulating layer or layers should be provided as part of the composite tank. If the stored fluid is injected and intended to be stored at temperatures below about minus 40°C and the enclosing structure (e.g, bulkheads and decks or inner bottom of a ship) are made of non-cryogenic (mild or low alloy) steel, then the insulating materials should be designed and installed to establish a barrier to protect an enclosure made from mild or low alloy steel from risk of brittle failure.

The primary features of the fluid containment tank apparatus, combinations, and methods of the present disclosure will now be described with reference to the drawing figures, after which some of the construction and operational details, some of which are optional, will be further explained. The same reference numerals are used throughout to denote the same items in the figures.

With reference to the drawings, FIGS. 1A-C schematically illustrate an embodiment of a composite tank apparatus for fluid containment as practiced according to US 9,033,178 B2. FIGS. 2A-C schematically illustrate an embodiment of a composite tank apparatus for fluid containment that is distinct from and highly advantageous compared to a tank practiced according to US 9,033,178 B2 in that the interiors of the cells of the tank are in direct fluid communication by providing carefully aligned through-wall holes in flush contacting, flat wall panel portions of adjacent flat-sided cells. The through-wall holes allow the provision of internally run interconnecting fluid conduits which can greatly reduce risks from fluid leaks at external connections between conduits.

FIGS. 1A, 1B, and 1C illustrate schematically three views of a single composite tank apparatus **100** for fluid containment as practiced according to US 9,033,178 B2. FIG. 1A illustrates schematically a top-side plan view of a three-cell composite tank apparatus **100** for fluid containment as practiced according to US 9,033,178 B2. The end walls **101** of the tank's enclosing structure are reinforced to structurally accommodate the pressure acting on the insulating layer **120** between the end walls **101** and flat side wall panel of the cells at each end of the array of three flat-sided cells that is imposed by pressure of the fluids stored within the tank apparatus. The side walls of the tank's structural enclosure **110** are structurally integrated with the end walls **101** and structurally reinforced (for example, post-tensioned if the walls are made of concrete) such that they can safely accommodate the pressure-induced forces acting on the end walls **101.**

The end walls **101** and side walls **110** of the enclosing structure are either structurally integrated with the bottom **170** illustrated schematically in FIG. 1B and FIG. 1C in a way that rigidly resists the forces acting on the walls of the enclosure or are allowed to slide on a seal between them and the bottom **170** that maintains a desired environmental isolation and meets relevant codes.

The end walls **101** and side walls **110** of the enclosing structure are also either structurally integrated with a cover (not shown) in a way that at least partially resists the forces acting on the walls of the enclosure or are allowed to slide on a seal between them and the cover that maintains desired environmental isolation and meets relevant codes.

The walls and bottom of the tank's enclosure may, for example, be reinforced and post-tensioned concrete panels or stiffened metal (e.g., steel) or fiber-reinforced matrix panels, bulkheads, decks, or inner bottoms of a barge or ship. While the cover of these composite tanks may, for example, be similar panels or decks, a simple peaked metal or non-metal roof, or a membrane supported by frames or air pressure differential.

In this embodiment, a layer of insulation **120** lines the interior of the tank's enclosing structure. There is an enclosed atmosphere **130** within the space defined by the insulation lining the tank's enclosing structure and the tank cover. The composition, pressure, and temperature of this atmosphere is likely to be regulated and carefully monitored.

Each of the top caps **140** (also referred to herein as "heads") of the three cells illustrated schematically in FIG. 1A, 1B, and 1C feature an accessway fitting **150** with fluid conduit and manway access penetrations.

FIG. 1B is a schematic cross-sectional view clearly illustrating the practice of US 9,033,178 B2 wherein the flat side wall panels of each cell of the composite tank apparatus **100** are flush against the flat side wall panels of the adjacent storage cells or as in this embodiment a supporting layer of insulation **120.** The risers (vertical fluid conduits) **310** connected to valve-controlled upper fluid conducting manifold **180** provide flow pathways from the tops **140** of the cells while the risers **310** connected to valve-controlled lower fluid conducting manifold **185** provide flow pathways from the bottoms **160** of the cells to enable simultaneous fluid injection to and extraction from the cells in a way that is intended to maintain pressure balancing across all cells. The external piping and manifolds provide the only interconnections between the otherwise independent cells. The semi-circular bottoms of the cells **160** (also called "heads") are sitting in and supported by depressions in the insulation **120** lining the bottom of the tank's bottom panel **170** of its structural enclosure. Valves for isolation and control of fluids being stored in this composite tank **100** are by common practice for those skilled in the art located outside of the composite tank enclosure and, thus, are not shown to simplify presentation of the concepts detailed herein.

FIG. 1C is a schematic broadside elevation view of one of the two-sided flask cells within the composite tank's insulated structural enclosure. The figure also illustrates how the cell bottom cap **160** sits in and can be supported by the insulation **120.** However, FIG 1C most prominently displays a cell's large flat side panel that is a key feature of the tanks of US 9,033,178 B2. Further, FIG. 1C illustrates the point that the semi-circular edges of the cells require no external support and, thus, do not contact the insulation **120** lining the side walls **110** of the tank's enclosing structure.

FIGS. 2A, 2B, and 2C provide three schematic views of a single composite tank apparatus embodiment **200** for fluid containment as practiced according to the present disclosure. In embodiment **200,** the composite tank is comprised at its core of three integrated metallic cells.

FIG. 2A illustrates schematically a top-side schematic plan view of a three-cell composite tank apparatus for fluid containment featuring all the same elements as FIG. 1A with the notable exception that the three-cell composite tank has in this embodiment only one accessway fitting **150** with fluid conduit and manway access penetrations. Accessway fitting **150,** in this embodiment, is installed on the top cap **140** of the central cell of the three cells illustrated schematically in FIG. 2A.

FIG. 2B is a schematic midway cross-sectional view of the three-cell composite tank of embodiment **200** clearly illustrating key aspects and advantages of the composite tanks detailed in this disclosure. In embodiment **200,** interiors of all three cells of the composite tank are in direct fluid communication by the provision of matching through-wall holes (called "lightening holes") in adjacent flat wall panel portions with the perimeters of the matched through-wall holes sealed together to structurally resist relative movement and prevent leakage of fluid from containment by, in this embodiment, continuous weldments joining the adjacent steel plates. In embodiment **200,** the edge of a large lightening hole in the center of each of the adjacent, flush-contacting flat wall panel portions of the cells is stiffened by a flat-bar stiffener **201** that is welded in position along the entire perimeter of the lightening hole. Smaller through-wall holes **210** above and below the large lightening hole allow for fluid conduits to be run horizontally through the walls of adjacent cells.

In FIG. 2B, risers **310** and manifold **181** providing flow pathways connecting the interior spaces within tops **140** of the composite tank's three cells, while a second set of risers **310** and manifold **186** providing flow pathways from near the bottoms **160** of these cells, enabling simultaneous fluid injection to and extraction from the cells. A third riser **410** from manifold **186** to and through the accessway fitting **150** fabricated onto the top cap **140** of the central cell allows fluid to be injected at or withdrawn from the bottoms of the cells in the composite tank. Similarly, a fourth riser **430** from manifold **181** to and through the accessway fitting **150** allows fluid to enter or exit from upper portions of the integrated cellular array. A port may be opened in riser pipe **430** at or near the point where it exits through accessway fitting **150** to allow fluid to be injected to or purged from the high point in that fitting. Therefore, a separate riser conduit **310,** as shown descending from the uppermost points in the two adjacent cells, is not required. It is worth noting that pressure balancing across the cells of this composite tank apparatus embodiment **200** is much less of a concern than for composite tanks designed according to US 9,033,178 B2 because the interior spaces within all cells are in full direct fluid communication due to the through-wall openings in the adjacent flat wall panel portions. The horizontal conduits of manifolds **181** and **186** pass directly between cell through paired through-wall holes **210** in the adjacent flat wall portions. These holes may be just large enough to match the exterior of the conduits or they may be much larger such that the conduits are not supported directly by the cell wall material or weldment where it is penetrating through the walls. If the conduits are intended to fit the through-wall holes tightly, the surrounding material of the cell walls should be seal-welded to the exterior of the conduits. Whether the through-wall holes are a tight fit or oversized, perimeters of these holes must, in this embodiment, be sealed together in a way that ensures structural integrity and fluid tightness to prevent leakage from the composite tank.

FIG. 2C schematically illustrates a cross-sectional elevation view illustrating the placement of three through-wall holes in a flat wall panel portion of one of the three cells comprising the fluid containment core of composite tanks detailed in this disclosure. The large lightening hole in the center of the adjacent, flush-contacting flat wall panel portion is ringed by a flat bar stiffener **201** which can be included in the design of the cells and tank to ensure stability during handling and structural integrity during operation. Two smaller holes **210** have no ring stiffening but have continuous weldments around their perimeters to seal the adjacent flat plates to each other to ensure structural integrity and fluid tightness to prevent leakage from the composite tank. These smaller holes **210** are placed to allow the passage of fluid conduits for upper fluid conducting manifold **181** and lower fluid conducting manifold **186,** but those manifolds are not shown in this figure for clarity. Of course, if large lightening holes are suitably placed, the horizontal conduits of manifolds **181** and **186** can be designed to run through those openings between adjacent cells. The manifold conduits running horizontally throughout the cellular array can be supported at the periphery of the lightening holes as needed to ensure stability of the fluid transfer system during operation. In general, there is no requirement that the conduits be welded to the skins of the cells where they pass through the adjacent flat wall panels. It is possible to use clamps instead of weldments at points where support is required.

FIGS. 3A and 3B schematically illustrate two views of a lower portion of a single cell in a multi-cell composite tank apparatus embodiment **300** for fluid containment as practiced according to the present disclosure illustrating the concept for a branched manifold piping arrangement.

FIG. 3A provides a schematic plan view looking down on the bottom portion **300** of a single cell in the composite tank of this disclosure illustrating a branched manifold arrangement with branches **301** on both sides of the central conduit of manifold **186** to allow filling to or drainage from both sides of a wide storage cell. While in FIG.3B, riser pipes **310** are schematically shown to extend from both branches **301** downward to near the bottom of the bottom cap **160.**

While the lower manifold **186** and branches as schematically illustrated in FIGS. 2B, 3A, and 3B would likely be intended for injecting and withdrawing ("draining") liquids, an inverted arrangement in the upper portion of the cells (as illustrated schematically in FIG. 2B) would likely be intended for injecting and withdrawing lighter, gaseous fluids to and from at or near the tops of the cells in the composite tank.

FIG. 4 illustrates schematically a cross-sectional elevation view within a two-sided cell that is part of an array of at least two cells comprising another composite tank embodiment **400** in accordance owth the present disclosure, schematically illustrating how a bias can be permanently or temporarily imposed on the orientation of the composite tank of embodiment .**400** to establish distinct high and low points in wide cells of the integrated array. A foundation **401** can be constructed beneath a fixed composite storage tank to impose a permanent bias or a temporary bias can be imposed on a composite storage tank that is constructed according to the present disclosure within the hull of a ship or barge by ballasting the vessel to impose a slight heel. If a similar temporary heel is desired in a composite tank's cellular array that is an ISO container or part of a trucking trailer or railcar, the unit can be positioned on a slanted surface (e.g., a ramp) that imposes the desired orientation. The individual cells may also be manufactured with a slight transversely sloping bias in their bottoms so that a distinct low point exists when assembled into other composite tank embodiments that otherwise has an essentially vertical orientation (i.e., no globally induced heel or bias of the tank). The angle of heel or bias of the tank or transverse slope manufactured into the bottom of the tank need not be very large to establish a practical low point - typically, not more than a couple degrees, but practically not more than about 5 degrees.

A riser pipe **310** in FIG. 4 is illustrated to be attached to lower manifold **186** allowing injection to and drainage from a point at or near the induced low point of bottom cap **160** within the cell shown. A riser **410** from manifold **186** to and through a fitting **420** fabricated into the top cap **140** of the cell illustrated in FIG. 4 allows fluid to enter or exit the integrated cellular array. Similarly, a riser **430** from manifold **181** to and through a fitting **440** fabricated into the top cap **140** of the cell illustrated in FIG. 4 allows fluid to enter or exit from upper portions of the integrated cellular array. A port may be opened in the riser pipe **430** at or near the fitting **440** to allow fluid to be injected to or purged from at or near the induced high point inside the cell illustrated in FIG. 4. Therefore, a separate riser conduit, such as illustrated in FIG. 2B as element **310,** is not required or shown in FIG. 4. In certain embodments, actively controlled valves (not illustrated) may be provided on the top of the risers **410** and **430,** allowing isolation and control of flow for fluids intended to be stored within certain composite tank apparatus embodiments of this disclosure. As in FIGS. 1 and 2, the covering (e.g., roof) of the composite tank's enclosure is not being illustrated in FIG. 4. The valves are also not shown because practical operational considerations will typically place such common and necessary appurtenances conveniently outside of the enclosed containment space.

A manway access device **450** is shown as fabricated into the accessway fitting **150** fabricated onto the top cap **140** of the cell illustrated in FIG. 4.

FIGS. 5A, 5B, and 5C schematically illustrate a multi-cell composite tank apparatus embodiment **500** (comprised of ten two-sided cells) with through-wall lightening holes provided in adjacent flat wall panel portions of the co-dependent cells confined within an insulated hold of a marine vessel (ship or barge) for storage or transport of fluid cargo according to one embodiment of the present disclosure. While the FIGS, 5A-5C depict a composite tank comprised of ten two-sided flask cells, there is theoretically no limit to the number of cells that may be lined up in this straight-line array. For clarity and ease of presentation, none of the internal fluid conduits (piping manifolds and risers) are depicted in FIGS. 5A, 5B, and 5C. For the same reasons, none of the conventional stiffening of hull structures is depicted in FIGS. 5A, 5B, and 5C.

FIG. 5A is a schematic plan view across the tops of a ten-cell composite tank apparatus embodiment **500** within the insulated hold of a marine vessel. The perimeter of the vessel's cargo hold is defined by the longitudinal bulkheads **520** and the transverse bulkheads **550A.** The interior of the hold is lined with insulation **120** that can be designed and installed as a liner that protects the metal typically used in construction of a marine vessel's hull from temperatures associated with a cryogenic cargo fluid. In this embodiment, we may assume that the shell **510,** bulkheads **(520, 550A,** and **550B),** and supporting stiffening structures are made of mild or low alloy steel. The heavily stiffened regions **540** at both ends of the cargo hold are designed to effectively support the end bulkheads **550A** for carrying the pressure being transmitted through the insulation **120** from the cells **530** at the ends of the array of two-sided cells. The reinforcing end structures **540** pick up the pressure-induced loading coming from the storage cells **530** for transfer primarily by shear into the longitudinal structure of the hull. Conventional longitudinal hull strength analysis must account for the additional stresses imposed by any pressure-induced loading on the cargo hold end bulkheads **550A.**

In embodiment **500,** eight two-sided cells **531** are linearly aligned to provide a continuous storage volume between the fore and aft ends of the end cells **530.** The flat sides of all of the cells are in flush contact with their neighbors. The flat sides of the cells in contact with an adjacent cell include through-wall holes that provide fluid (and pressure) continuity throughout all cells of the composite tank. Straight-line arrangement of the cells can ensure that no unintended pressure forces are imposed on the longitudinal bulkheads **520.** A relatively large space can be left open between the insulation lining the longitudinal bulkheads **520** and the curved edges of the cells. Common marine practice stipulates that a minimum of 40cm clearance must be provided if human inspection of the space is required. If there is no contact between the cells and the insulation lining the longitudinal bulkheads **520,** then conventional stiffening practice can be applied for design of those bulkheads.

Each of the end cells **530** in embodiment **500** feature an accessway fitting **150** with fluid conduit and manway access penetrations. Since the lightening holes and internal piping links the interior all of the cells in composite tank apparatus embodiment **500** are in direct fluid communication, it is possible to have only one such fitting **150** servicing the entire tank in embodiment **500.**

FIG. 5B is a schematic side elevation view showing an exterior flat side of a two-sided flask cell **530** at either end of the array of ten two-sided cells comprising the composite tank within the insulated hold of a marine vessel in embodiment **500.** A dashed line indicates a stiffener ring **580** lining a single large centrally placed lightening hole in the flat wall panel portion of the opposing side. The cell **530,** featuring an accessway fitting **150** with fluid conduit and manway access penetrations, is situated within the insulated hold of a marine vessel **500** with its boundaries defined (in this view) by the longitudinal bulkheads **520,** the main deck **511,** and the inner bottom **560.** The interior of the hold is lined with insulation **120** which does not contact the edge of cell **530** but is thick enough and has a shaped recess to support its semi-circular bottom. The longitudinal bulkheads **520** are well spaced from the shell of the hull **510** to create wide wing spaces to protect the cargo space from damage in the event of a side impact on the hull. If the wing space is at least 20% of the beam of the vessel, then most codes assume that the cargo hold will not be penetrated in a side impact.

The inner bottom **560** is supported by a transverse bulkhead **570** in embodiment **500,** as illustrated schematically in FIG. 5B. Conventional stiffening and deep frames will typically be configured to support the inner bottom **560** between transverse bulkheads like the one **570** illustrated in this view.

FIG. 5C is a schematic cross-sectional elevation view of a two-sided flask cell **531** within the insulated hold of a marine vessel in embodiment **500** illustrating a large centrally placed lightening hole in the flat wall panel portion that is stabilized with a flat-bar stiffener **580.** The cell **531** is situated within the insulated hold of the marine vessel in embodiment **500** with its boundaries defined (in this view) by the longitudinal bulkheads **520,** the main deck **511,** and the inner bottom **560.** The interior of the hold is lined with insulation **120** which does not contact the edge of cell **531** but is thick enough and has a shaped recess to support its semi-circular bottom. The longitudinal bulkheads **520** are well spaced from the shell of the hull **510** to create wide wing spaces to protect the cargo space from damage in the event of a side impact on the hull.

The inner bottom **560** is supported by a transverse bulkhead **570** in embodment **500,** as illustrated schematically in FIG. 5C. Conventional stiffening and deep frames will typically be configured to support the inner bottom **560** between transverse bulkheads like the one **570** illlustrated in this view.

FIGS. 6A, 6B, and 6C schematically illustrate a two multi-cell composite tank apparatus embodiment **600** (comprised of an unspecified quantity of cells) with through-wall lightening holes provided in adjacent flat wall panel portions of the co-dependent cells confined within an insulated hold of a marine vessel (ship or barge) for storage or transport of fluid cargo according to one embodiment of the present disclosure. The two cellular arrays are arranged to run parallel to each other (side-by-side but not in contact with each other). For clarity and ease of presentation, none of the internal fluid conduits (piping manifolds and risers) are depicted in FIGS. 6A, 6B, and 6C. For the same reasons, none of the conventional stiffening of hull structures is depicted in FIGS 6A, 6B, and 6C.

FIG. 6A is a schematic plan view across the tops of the two multi-cell composite tank apparatus of embodment **600** within the insulated hold of a marine vessel. The perimeter of the vessel's cargo hold is defined by the longitudinal bulkheads **520** and the transverse bulkheads **550A and 550B.** The interior of the hold is lined with insulation .**120** that can be designed and installed as a liner that protects the metal typically used in construction of a marine vessel's hull from temperatures associated with a cryogenic cargo fluid. In this embodiment, we may assume that the shell **510,** bulkheads **(520, 550A,** and **550B),** and supporting stiffening structures are made of mild or low alloy steel. The heavily stiffened regions **540** at both ends of the cargo hold are designed to effectively support the end bulkheads **550A and 550B** for carrying the pressure being transmitted through the insulation **120** from the cells **630** at the ends of each of the linear arrays of two-sided cells. The reinforcing end structures **540** pick up the pressure-induced loading coming from the storage cells **630** for transfer primarily by shear into the longitudinal structure of the hull. Conventional hull strength analysis must account for the additional stresses imposed by any pressure-induced loading on the cargo hold end bulkheads **550A and 550B.**

An unspecified quantity of two-sided cells **631** are linearly aligned in embodment **600** to provide a continuous storage volume between the fore and aft ends of the end cells **630** of each of the composite tanks in the hold. The flat sides of all of the cells are in flush contact with their neighbors in their specific linear array. The flat sides of the cells in contact with an adjacent cell include through-wall holes that provide fluid (and pressure) continuity throughout all cells of each composite tank. Straight-line, linear arrangement of the cells can ensure that no unintended pressure forces are imposed on the longitudinal bulkheads **520.** A relatively large space can be left open between the two arrays and the insulation lining the longitudinal bulkheads **520** and the curved edges of the cells. If there is no contact between the cells and the insulation lining the longitudinal bulkheads **520,** then conventional stiffening practice can be applied for design of those bulkheads.

In embodiment **600,** each of the end cells **630** feature an accessway fitting **150** with fluid conduit and manway access penetrations.

FIG. 6B is a schematic side elevation view illustrating the exterior flat side of the two-sided flask cells **630** at either end of the two linear arrays of two-sided cells comprising the two composite tanks in embodiment **600** within the insulated hold of a marine vessel. Dashed lines indicate a stiffener ring **580** lining a single large centrally placed lightening hole in the flat wall panel portion of the opposing side of each of these cells **630.** The cells **630,** each featuring accessway fittings **150** with fluid conduit and manway access penetrations, are situated side-by-side within the insulated hold of a marine vessel **600** with its boundaries defined (in this view) by the longitudinal bulkheads **520,** the main deck **511,** and the inner bottom **560.** The interior of the hold is lined with insulation **120** which does not contact the vertically-running radiused edges of the cells **630** but is thick enough and has shaped recesses to support their semi-circular bottoms. In this embodiment the longitudinal bulkheads **520** are well spaced from the shell of the hull **510** to create wide wing spaces to protect the cargo space from damage in the event of a side impact on the hull.

In embodiment **600,** the inner bottom **560** is supported by a transverse bulkhead **570** as illustrated in FIG. 6B. Conventional stiffening and deep frames will typically be configured to support the inner bottom **560** between transverse bulkheads like the one **570** illustrated in this view.

FIG. 6C is a schematic cross-sectional elevation view of two two-sided flask cells **631** situated side-by-side within the insulated hold of a marine vessel of embodiment **600** illustrating large centrally placed lightening holes in their flat wall panel portions that are stabilized with flat-bar stiffeners **580.** In embodiment **600,** the cells **631** are situated within the insulated hold of a marine vessel with its boundaries defined (in this view) by the longitudinal bulkheads **520,** the main deck **511,** and the inner bottom **560.** The interior of the hold is lined with insulation **120** which does not contact the vertically-running radiused edges of cells **631** but is thick enough and has shaped recesses to support their semi-circular bottoms. In this embodiment, the longitudinal bulkheads **520** are well spaced from the shell of the hull **510** to create wide wing spaces to protect the cargo space from damage in the event of a side impact on the hull.

The inner bottom **560** is supported by a transverse bulkhead **570** as illustrated in FIG. 6C. Conventional stiffening and deep frames will typically be configured to support the inner bottom **560** between transverse bulkheads like the one **570** illustrated in this view.

As used herein the phrases "sufficient rigidity in support of the outwardmost flat side panel portions" and "the at least two flat-sided co-dependent cells of the array are prevented from over- expanding and displacing" mean that the specified layer of insulation material between the flat side panel portions and, for example, a buttressed reinforced concrete end or side wall of a composite tank's structural enclosure are rigid enough to ensure that the panel portions cannot deflect outward more than a few wall thicknesses and in the extreme for cells with panels of very large dimensions, say 30 to 120 feet (9.1m to 36.6m) wide and 40 to 150 feet (12.2m to 45.7m) tall, as much as 25 wall thicknesses; however, practical applications of buttressed reinforced concrete enclosures (or reinforced ships' cargo hold bulkheads) lined with insulation capable of withstanding internal operating pressures targeted in the present disclosure, say high density balsa wood, maximum center span deflections will typically be limited to less than about 5 cell wall thicknesses in certain embodiments, and in certain extreme embodiments, less than about 10 cell wall thicknesses such that, when internal pressure is established within the array of at least two flat-sided co-dependent cells at a targeted level for operations or survival, the at least two flat-sided co-dependent cells of the array are prevented from expanding and displacing to a degree that would generate unacceptable stresses or collapse according to the relevant current ASME Boiler and Pressure Vessel code as demonstrated by the following example calculations for an ASME SVIII-Div2, Type 1 composite tank comprised of an array of at least two two-sided flask cells with the following design parameters:
Operating pressure, P = 225psig (~15barg);
Skin Material - SA553 (9% Ni with a Tensile Strength of 100ksi (690MPa)) which is allowed to carry maximum stress of about 41.7ksi (288MPa) under operating conditions according to the ASME code set noted for this example (welding specifications should ensure that the weld material is over-matched to avoid having any welds be a weak point in the composite tank);
The number of two-sided cells in the array comprising the composite tank in this example is three (meaning that one cell is sandwiched between two end cells so that this composite tank comprises only two pairs of flush-contacting flat wall side panels);
Individual cells have the following key dimensions - height is 64 feet (19.5m), width is 40 feet (12.2m), and the radius of radiused sections connecting the flat panel portions of the two-sided cells is 7.38 feet (2.25m);
The skin of all three cells is specified at 0.75 inch (i.e., the wall thickness, T, = 0.75 inch or about 19mm; however, the wall thickness of the top and bottom end caps may be specified to be a few millimeters thicker to ease fabrication and handling with a tangent tapered transition edge to match or nearly match the skin/wall thickness of the midbody of the cells where the caps will be welded to the midbody;
The size of through-wall lightening holes that may be cut or fabricated in the flat wall panels to match the hole or holes in the adjacent flush-contacting flat wall panel of the adjacent cell (i.e., the amount of material that may be eliminated from each flat wall panel if no reinforcement is planned around or near the perimeter of the hole as replacement for any of the wall material eliminated) may be estimated for initial design purposes as follows, assuming for this exemplary embodiment just one centrally located oval through-wall lightening hole is provided in each of the two flat wall panel sides of the central cell (aligned with matching lightening holes in the adjacent flat wall panel sides) of this 3-cell composite tank and the rigidity of the enclosure end wall and insulating liner is adequate to limit deflection of the central part of the outwardmost flat side panel portions to less than 5 cell wall thicknesses (note - hydrostatic head is ignored for simplicity/clarity in these calculations);
the vertical extent of an oval hole cut through the wall, Hcut, should be limited so that the horizontal stress component in the cell's skin (due to internal pressure, P, acting horizontally on the internal surface of the radiused sections running vertically bottom to top along the outward edges of each cell) at a plane cutting vertically across the narrow dimension of the central cell and orthogonal to the cell's width at the middle of the centrally located oval through- wall hole, defined in Equation 1:

   P*(2*R*(H-2*R)+pi*R²) / (2T*((H-2*R)-H_{cut})+T*2*pi*R) (1)

   does not exceed about 95% of the allowable stress value noted above, or does not exceed about 99% of the allowable stress value noted above; and
the horizontal extent of an oval hole cut through the wall, Wcut, is limited so that the vertical stress component (due to internal pressure, P, acting vertically upward on the internal surface of the top cap/head) at a plane cutting horizontally across the cell at the middle of the centrally located oval through-wall hole, defined by Equation 2:

   (P*(2*R*(W-2*R)+pi*R²)-(cell's steel weight)/2) / (2T*((W-2*R)-W_{cut})+T*2*pi*R)) (2)

   does not exceed about 95% of the allowable stress value noted above, or does not exceed about 99% of the allowable stress value noted above, so that the tri-axial stress state accounting for the orthogonal stress due to the moderate internal operating pressure acting directly on the flat wall panels and the bending induced stress across the thin (0.75 inch (19mm)) wall that is limited by the rigidty of the supporting insulating liner and structural enclosure are accommodated by keeping a slight margin between these calculated stress components and the allowable stress value noted above such that the vertical extent of the centrally placed oval through-wall lightening hole would be limited to about 28.4 feet (8.7m) (-44% of H) and the horizontal extent of the hole would limited to about 15.9 feet (4.85m) (-40% of W) (detailed finite element analysis of the composite tank structure will be required to confirm that stress distributions throughout all system elements do not exceed the ASME code allowances in final design and, if cyclical pressure loading is anticipated, then fatigue life calculations must be performed accounting for the welding and inspection details specified for each composite tank's service and manufacturing process.

It should be understood that embodiments 200, 300, 400, 500, and 600 are only exemplary of many possible tank apparatus and methods. Suitable arrays of cells may have any longitudinal shape (straight, L-shaped, arcuate, for example S-shaped), and may have one or more parallel and/or series arranged regions. Ship holds may have any lateral (cross-sectional) shape, such as rectangular, oval, round, V-shaped, U-shaped, and the like. The cross-sectional shape may be the same or different along the length of a ship or other transport mechanism.

The flow rates of the fluids entering and exiting the tank apparatus or individual cells thereof will depend on many factors, including the dimensions of conduits, pressure of the fluids and cells, size of the tank apparatus and cells, the presence of flow control devices (such as orifices, control valves, in-line mixers, and the like), temperature of the fluids, viscosity of the fluids, and like parameters, but in general the flow rate of fluids into tank apparatus may range from about 5gpm to about 5000gpm (from about 1.136cbm/hr. to about 1,136cbm/hr.), or from about 20gpm to about 500gpm (or from about 4.544cbm/hr. to about 113.6cbm/hr.), or from about 50gpm to about 300gpm (from about 11.36cbm/hr. to about 68.16cbm/hr.).

Certain embodiments may comprise a process control scheme for the flow of fluids into and out of the tank apparatus. For example, a master process controller may be configured to provide any number of control logics, including feedback control, feed-forward control, cascade control, and the like. The disclosure is not limited to a single master process controller, as any combination of controllers could be used.

In certain embodiments, tank apparatus may be cooled or heated by a heat transfer fluid selected from the group consisting of gaseous, liquid, or combinations of gaseous and liquid compositions that functions or is capable of being modified to function as a heat transfer fluid. Gaseous heat transfer fluids may be selected from air, including ambient air and treated air (for air treated to remove moisture), inert inorganic gases, such as nitrogen, argon, and helium, inert organic gases such as fluoro-, chloro- and chlorofluorocarbons, including perfluorinated versions, such as tetrafluoromethane, and hexafluoroethane, and tetrafluoroethylene, and the like, and mixtures of inert gases with small portions of non-inert gases, such as hydrogen. Heat transfer liquids may be selected from inert liquids which may be organic, inorganic, or some combination thereof, for example, salt solutions, glycol solutions, oils and the like. Other possible heat transfer fluids include steam, carbon dioxide, or mixtures thereof with nitrogen. Heat transfer fluids may be compositions comprising both gas and liquid phases, such as the higher chlorofluorocarbons.

## Claims

1. A composite tank apparatus for fluid containment at pressures at or near ambient to moderate pressures comprising:
a) an array of at least two flat-sided co-dependent cells (530,531) with relatively thin skin cell walls made of metallic or non-metallic materials, each of the at least two flat-sided co-dependent cells having at least two flat wall panel portions connected by radiused sections (140,160) arranged such that all of the flat wall panel portions of the at least two flat-sided co-dependent cells are either in flush contact with flat wall panel portions of adjacent ones of the at least two flat-sided co-dependent cell or in flush contact with flat supporting panels of an enclosing structure (110,170) enclosing the array of at least two flat-sided co-dependent cells, each of the at least two flat-sided co-dependent cells having a top and a bottom cap connected respectively to top and bottom ends of the at least two flat wall panel portions comprising flat walls joined by the radiused sections;
b) the enclosing structure having an interior surface and an exterior surface, the enclosing structure configured to provide environmental isolation with sufficient structural strength and with sufficient rigidity to support exterior flat side panel portions of the at least two flat-sided co-dependent cells at exterior portions of the array of at least two flat-sided co-dependent cells such that, when internal pressure is established within the array of at least two flat-sided co-dependent cells at a targeted level for operations or survival, the at least two flat-sided co-dependent cells of the array are prevented from over-expanding and displacing; and
**characterised in that** the at least two flat-sided co-dependent cells sealed with each other around a perimeter of at least one matching pair of lightening through-wall holes provided in the flush-contacting flat wall panel portions of the adjacent ones of the at least two flat-sided co-dependent cells in the composite tank, the perimeter of all the pairs of lightening through-wall holes sufficiently sealed to structurally resist relative movement and prevent leakage of fluid from containment .

2. The composite tank apparatus of Claim 1, wherein one or more layers of thermally insulating material (120) line an interior surface or an exterior surface of the enclosing structure.

3. The composite tank apparatus of Claim 1 or 2, further comprising at least one fluid accessway for injection and withdrawal of fluids, the at least one fluid accessway (150) comprising one or more conduits that penetrate into the top or bottom caps of one or more of the at least two flat-sided co-dependent cells to join with at least one manifold (180) that runs horizontally within co-dependent cells and through adjacent interior walls of the array of the at least two flat-sided co-dependent cells allowing simultaneous injection and ejection of fluids.

4. The composite tank apparatus of claim 1 wherein the cell walls are selected from steel alloys or aluminum alloys, the cell walls having thickness ranging from typically much less than about 25.4mm to about 76.2mm.

5. The composite tank apparatus of claim 1 wherein the cell walls are selected from fiber-impregnated artificial rubber sheet, fiber-resin matrix, or ferro-cement materials.

6. The composite tank apparatus of claim 1 wherein the perimeter of all the pairs of lightening through-holes are sealed by a continuous weldment joining the adjacent pairs of the flush-contacting flat wall panel portions

7. The composite tank apparatus of claim 1 wherein the at least two flat-sided co-dependent cells of the array are configured to be prevented from expanding and displacing beyond limits that would induce horizontal and vertical stresses exceeding about 95% of allowable horizontal and vertical stress values under operating pressure.

8. The composite tank apparatus of claim 1 configured for storage of fluids that must be contained at temperatures at least 10°C different from normal ambient conditions.

9. The composite tank apparatus of claim 1 comprising one or more fluid accessways, openings, or conduits for injection and withdrawal of fluids.

10. The composite tank apparatus of claim 8 wherein the fluid accessways comprise one or more conduits that penetrate into the top or bottom caps of one or more of the at least two flat-sided co-dependent cells comprising the composite tank apparatus to join with conduits that run horizontally within co-dependent cells and through adjacent interior walls of the array of the at least two flat-sided co-dependent cells allowing simultaneous injection and ejection of fluids.

11. A method of making a substantially metallic composite tank system:
a) providing a plurality of thin metallic flat wall panel portions, a plurality of metallic radiused sections, and a plurality of metallic top and bottom caps to produce at least two flat-sided co-dependent cells with relatively thin skins;
b) fastening the flat panel portions to tangent edges of the plurality of radiused sections to form a plurality of cell bodies, and fastening the plurality of metallic top and bottom caps to the plurality of cell bodies to form the at least two flat-sided co-dependent cells with relatively thin skins;
c) arranging the at least two flat-sided co-dependent cells with relatively thin skins such that all of the flat wall panel portions of the at least two flat-sided co-dependent cells are either in flush contact with each other or in flush contact with flat supporting panels of an enclosing structure to form an enclosed array of at least two flat-sided co-dependent cells; and
d) the enclosing structure having an interior surface and an exterior surface, the enclosing structure configured to provide environmental isolation with sufficient structural strength and with sufficient rigidity to support exterior flat side panel portions of the at least two flat-sided co-dependent cells at exterior portions of the array of at least two flat-sided co-dependent cells such that, when internal pressure is established within the array of at least two flat-sided co-dependent cells at a targeted level for operations or survival, the at least two flat-sided co-dependent cells of the array are prevented from expanding and displacing to such a degree that the resulting stresses exceed relevant pressure vessel code allowables or structural instability occurs
**characterised by** sealing the at least two flat-sided co-dependent cells with each other around a perimeter of at least one matching pair of lightening through-wall holes provided in adjacent pairs of the flush-contacting flat wall panel portions of the at least two flat-sided co-dependent cells in the composite tank, the perimeter of all the matching pairs of lightening through-wall holes sufficiently sealed to structurally resist relative movement and prevent leakage of fluid from containment.

12. The method of Claim 11, further comprising providing one or more accessways in the plurality of thin metallic flat wall panel portions.

13. The method of Claim 11 or 12, further comprising providing one or more penetrations in the plurality of metallic top and bottom caps.

14. A method of flowing a fluid into and extracting a same or different fluid from tops and bottoms of an array of at least two flat-sided cells of a composite tank apparatus according to claim 1 for fluid containment, the composite tank apparatus having through-wall lightening holes in adjacent flat wall panel portions of all adjacent cells of the array of at least two flat-sided cells, the cells each having a top cap (140) and a bottom cap (160), **characterised by** the method comprising:
(a) providing upper and lower horizontal fluid conducting manifolds (310) that extend internally through the through lightening holes (210) in adjacent flat wall panel portions of all adjacent cells of the array of at least two flat-sided cells comprising the composite tank apparatus;
(b) providing a first plurality of risers (410) fluidly connected to and running from the upper horizontal fluid conducting manifold to near a top of each cell's top cap in the array of cells comprising the tank apparatus providing a flow path from the top of each cell into the upper horizontal fluid conducting manifold;
(c) providing a second plurality of risers (430) fluidly connected to and running from the lower horizontal fluid conducting manifold to near a bottom of each cell's bottom cap in the array of cells comprising the composite tank apparatus providing a flow path from the bottom of each cell into the lower horizontal fluid conducting manifold (310);
(d) providing at least one third riser fluidly connected to and running from the upper horizontal fluid conducting manifold to and through an accessway fitting on the top cap or bottom cap of at least one of the cells in the array of cells comprising the composite tank apparatus;
(e) providing at least one fourth riser fluidly connected to and running from the lower horizontal fluid conducting manifold to and through an accessway fitting on the top cap or bottom cap of at least one of the cells in the array of cells comprising the composite tank apparatus; and
(f) flowing a low density fluid of a first specified pressure and a first temperature into or out of an upper part of the composite tank apparatus of the first aspect through the at least one third riser of while flowing a higher density fluid of the same or different chemical composition and of a second specified pressure and a second temperature simultaneously into or out of the bottom of the cells in the array of cells comprising the composite tank apparatus of the first aspect through the at least one fourth riser in a manner that allows a targeted pressure and temperature regime to be maintained within the composite tank apparatus.

15. The composite tank apparatus of claim 1 wherein the composite tank apparatus is constructed as a part of a facility selected from:
a) a storage facility fixed permanently or temporarily in place on land,
b) a transportable ISO container;
c) a trailer for over-road transport;
d) a rail cargo car or rail fuel tender for rail transport;
e) a cargo or fuel containment within or on a barge or ship.

16. The method of claim 14 wherein the composite tank apparatus is used to store or transport fluids selected from LNG, NGL, NH₃, CO₂, and H₂ as a dense gas, a liquid, or captured in a slurry of molecules.

17. The method of claim 11 comprising structurally combining all cells in the cellular array to establish a primary containment of the composite tank apparatus, wherein matching through-wall holes are opened in adjacent, flush-contacting flat wall panel portions and their aligned perimeters are welded or clamped together in a way that structurally resists relative movement and prevents leakage of fluid from containment.

18. The method of claim 11 comprising fluidly linking all cells in an integrated cellular array comprising a primary containment of the composite tank apparatus to establish internal flow paths from within the bottom caps and top caps and through the flat wall panel portions of the cells of the composite tank apparatus with lower and upper manifolds connecting uptake riser and downcomer riser pipe sections from near the lowest internal point of each cell's bottom and the highest internal point of each cell's top wherein these lower and upper manifolds include riser elements that tightly penetrate the skin of at least one cell of the composite tank to enable the injection to and extraction from the composite tank's primary containment.

19. The method of claim 11 for fluidly linking all cells in the cellular array comprising the primary containment of the composite tank apparatus to establish internal flow paths from all portions of the composite tank apparatus wherein the composite tank apparatus' orientation is biased with a transverse inclination such that the bottom caps of all its cells each have a definitive low point at or near the intake of a riser attached to a lower piping manifold or one of its branches to effectively fill and drain the tank of liquid or dense phase fluids and a definitive high point at or near the intake of a riser attached to an upper manifold or one of its branches to effectively fill and purge the tank of lighter dense phase or gaseous fluids.

## Patentansprüche

1. Zusammengesetzte Tankvorrichtung für das Aufnehmen von Fluiden bei Drücken bei oder nahe von Umgebungs- bis mäßigen Drücken, umfassend:
a) eine Anordnung von wenigstens zwei flachseitigen, voneinander abhängigen Zellen (530, 531) mit relativ dünnhäutigen Zellwänden aus metallischen oder nicht-metallischen Materialien, wobei jede der wenigstens zwei flachseitigen, voneinander abhängigen Zellen wenigstens zwei flache Wandplattenteile aufweist, die durch abgerundete Abschnitte (140, 160) verbunden sind, die derart angeordnet sind, dass alle flachen Wandplattenteile der wenigstens zwei flachseitigen, voneinander abhängigen Zellen entweder in einem bündigen Kontakt mit flachen Wandplattenteilen von benachbarten der wenigstens zwei flachseitigen, voneinander abhängigen Zellen oder in einem bündigen Kontakt mit flachen Halteplatten einer Umhausungsstruktur (110, 170), die die Anordnung von wenigstens zwei flachseitigen, voneinander abhängigen Zellen umschließt, sind, wobei jede der wenigstens zwei flachseitigen, voneinander abhängigen Zellen eine obere und eine untere Kappe aufweist, die jeweils mit oberen und unteren Enden der wenigstens zwei flachen Wandplattenteile mit den durch die abgerundeten Abschnitte verbundenen flachen Wänden verbunden sind,
b) wobei die Umhausungsstruktur eine Innenfläche und eine Außenfläche aufweist, wobei die Umhausungsstruktur konfiguriert ist zum Vorsehen einer Isolation von der Umgebung mit einer ausreichenden strukturellen Stärke und mit einer ausreichenden Steifigkeit, um äußere flachseitige Plattenteile der wenigstens zwei flachseitigen, voneinander abhängigen Zellen an äußeren Teilen der Anordnung von wenigstens zwei flachseitigen, voneinander abhängigen Zellen zu halten, sodass, wenn ein Innendruck in der Anordnung von wenigstens zwei flachseitigen, voneinander abhängigen Zellen zu einem Zielwert für Operationen oder einen Erhalt hergestellt wird, eine übermäßige Expansion und eine Verschiebung der wenigstens zwei flachseitigen, voneinander abhängigen Zellen der Anordnung verhindert wird,
**dadurch gekennzeichnet, dass** die wenigstens zwei flachseitigen, voneinander abhängigen Zellen um einen Umfang wenigstens eines einander entsprechenden Paars von Gewichtsreduktionsdurchgangslöchern in den einander bündig kontaktierenden flachen Wandplattenteilen der benachbarten der wenigstens zwei flachseitigen, voneinander abhängigen Zellen in dem zusammengesetzten Tank miteinander gedichtet sind, wobei der Umfang aller Paare der Gewichtsreduktionsdurchgangslöcher ausreichend gedichtet ist, um strukturell einer relativen Bewegung standzuhalten und ein Lecken eines aufgenommenen Fluids zu verhindern.

2. Zusammengesetzte Tankvorrichtung nach Anspruch 1, wobei eine oder mehrere Schichten eines thermisch isolierenden Materials (120) eine Innenfläche oder eine Außenfläche der Umhausungsstruktur auskleiden.

3. Zusammengesetzte Tankvorrichtung nach Anspruch 1 oder 2, die weiterhin wenigstens einen Fluidzugang für das Einführen oder Ausführen von Fluiden aufweist, wobei der wenigstens eine Fluidzugang (150) eine oder mehrere Leitungen umfasst, die sich in die oberen oder unteren Kappen eines oder mehrerer der wenigstens zwei flachseitigen, voneinander abhängigen Zellen erstrecken und mit wenigstens einem Verteiler (180), der sich horizontal in voneinander abhängigen Zellen und durch benachbarte Innenwände der Anordnung der wenigstens zwei flachseitigen, voneinander abhängigen Zellen erstreckt, verbunden sind, um ein gleichzeitiges Einführen und Ausführen von Fluiden zu erlauben.

4. Zusammengesetzte Tankvorrichtung nach Anspruch 1, wobei die Zellenwände aus Stahllegierungen oder Aluminiumlegierungen ausgewählt sind und wobei die Zellenwände Dicken im Bereich von gewöhnlich viel weniger als ungefähr 25,4 mm bis ungefähr 76,2 mm aufweisen.

5. Zusammengesetzte Tankvorrichtung nach Anspruch 1, wobei die Zellenwände aus einer faserimprägnierten Kunstkautschukplatte, einer Faser-Harz-Matrix oder aus Ferrozementmaterialien ausgewählt sind.

6. Zusammengesetzte Tankvorrichtung nach Anspruch 1, wobei der Umfang aller Paare von Gewichtsreduktionsdurchgangslöchern durch eine kontinuierliche Schweißung, die die benachbarten Paare der einander bündig kontaktierenden flachen Wandplattenteile verbindet, abgedichtet wird.

7. Zusammengesetzte Tankvorrichtung nach Anspruch 1, wobei die wenigstens zwei flachseitigen, voneinander abhängigen Zellen der Anordnung derart konfiguriert sind, dass eine Expansion und eine Verschiebung über Grenzen, die horizontale und vertikale Spannungen von mehr als ungefähr 95% der zulässigen horizontalen und vertikalen Spannungswerte unter dem Betriebsdruck verursachen würden, hinaus verhindert werden.

8. Zusammengesetzte Tankvorrichtung nach Anspruch 1, die konfiguriert ist für eine Lagerung von Fluiden, die bei Temperaturen, die wenigstens 10°C von normalen Umgebungsbedingungen verschieden sind, gelagert werden müssen.

9. Zusammengesetzte Tankvorrichtung nach Anspruch 1, die Fluidzugänge, Öffnungen oder Leitungen für das Einführen und Ausführen von Fluiden umfasst.

10. Zusammengesetzte Tankvorrichtung nach Anspruch 8, wobei die Fluidzugänge eine oder mehrere Leitungen umfassen, die sich in die oberen und unteren Kappen einer oder mehrerer der wenigstens zwei flachseitigen, voneinander abhängigen Zellen der zusammengesetzten Tankvorrichtung erstrecken und mit Leitungen, die sich horizontal in den voneinander abhängigen Zellen und durch benachbarte Innenwände der Anordnung der wenigstens zwei flachseitigen, voneinander abhängigen Zellen erstrecken, verbunden sind, um ein gleichzeitiges Einführen und Ausführen von Fluiden zu erlauben.

11. Verfahren zum Herstellen eines im Wesentlichen metallischen zusammengesetzten Tanksystems, umfassend:
a) Vorsehen einer Vielzahl von dünnen, metallischen, flachen Wandplattenteilen, einer Vielzahl von metallischen, abgerundeten Abschnitten und einer Vielzahl von metallischen oberen und unteren Kappen, um wenigstens zwei flachseitige, voneinander abhängige Zellen mit relativ dünnen Häuten zu erzeugen,
b) Befestigen der flachen Plattenteile an tangentialen Kanten der Vielzahl von abgerundeten Abschnitten, um eine Vielzahl von Zellenkörpern zu bilden, und Befestigen der Vielzahl von metallischen oberen und unteren Kappen an der Vielzahl von Zellenkörpern, um die wenigstens zwei flachseitigen, voneinander abhängigen Zellen mit relativ dünnen Häuten zu bilden, und
c) Anordnen der wenigstens zwei flachseitigen, voneinander abhängigen Zellen mit relativ dünnen Häuten derart, dass alle die flachen Wandplattenteile der wenigstens zwei flachseitigen, voneinander abhängigen Zellen entweder in einem bündigen Kontakt miteinander oder in einem bündigen Kontakt mit flachen Halteplatten einer Umhausungsstruktur sind, um eine umschlossene Anordnung von wenigstens zwei flachseitigen, voneinander abhängigen Zellen zu bilden,
d) wobei die Umhausungsstruktur eine Innenfläche und eine Außenfläche aufweist, wobei die Umhausungsstruktur konfiguriert ist, um eine Isolation von der Umgebung mit einer ausreichenden strukturellen Stärke und einer ausreichenden Steifigkeit für das Halten von äußeren flachseitigen Plattenteilen der wenigstens zwei flachseitigen, voneinander abhängigen Zellen an äußeren Teilen der Anordnung von wenigstens zwei flachseitigen, voneinander abhängigen Zellen vorzusehen, sodass, wenn ein Innendruck in der Anordnung von wenigstens zwei flachseitigen, voneinander abhängigen Zellen bei einem Zielwert für Operationen oder einen Erhalt hergestellt wird, eine übermäßige Expansion und eine Verschiebung der wenigstens zwei flachseitigen, voneinander abhängigen Zellen der Anordnung verhindert wird, damit keine Spannungen, die die für entsprechende Druckgefäße zulässigen Höchstwerte überschreiten, verursacht werden und keine strukturelle Instabilität auftritt,
**gekennzeichnet durch** das Dichten der wenigstens zwei flachseitigen, voneinander abhängigen Zellen miteinander um einen Umfang wenigstens eines einander entsprechenden Paars von Gewichtsreduktionsdurchgangslöchern, die in benachbarten Paaren der einander bündig kontaktierenden Flachwandplattenteile der wenigstens zwei flachseitigen, voneinander abhängigen Zellen in dem zusammengesetzten Tank vorgesehen sind, wobei der Umfang aller einander entsprechenden Paare von Gewichtsreduktionsdurchgangslöchern ausreichend gedichtet ist, um strukturell einer relativen Bewegung standzuhalten und ein Lecken eines aufgenommenen Fluids zu verhindern.

12. Verfahren nach Anspruch 11, das weiterhin das Vorsehen eines oder mehrerer Zugänge in der Vielzahl von dünnen, metallischen, flachen Wandplattenteilen umfasst.

13. Verfahren nach Anspruch 11 oder 12, das weiterhin das Vorsehen einer oder mehrerer Penetrationen in der Vielzahl von metallischen oberen und unteren Kappen umfasst.

14. Verfahren zum Einführen eines Fluids und Ausführen eines gleichen oder anderen Fluids an den oberen und unteren Enden einer Anordnung von wenigstens zwei flachseitigen Zellen einer zusammengesetzten Tankvorrichtung nach Anspruch 1 für das Aufnehmen eines Fluids, wobei die zusammengesetzte Tankvorrichtung durchgehende Gewichtsreduktionslöcher in benachbarten flachen Wandplattenteilen aller benachbarter Zellen der Anordnung von wenigstens zwei flachseitigen Zellen aufweist, wobei die Zellen jeweils eine obere Kappe (140) und eine untere Kappe (160) aufweisen, **dadurch gekennzeichnet, dass** das Verfahren umfasst:
(a) Vorsehen von oberen und unteren horizontalen, fluidführenden Verteilern (310), die sich intern durch die Gewichtsreduktionslöcher (210) in benachbarten flachen Wandplattenteilen aller benachbarter Zellen der Anordnung von wenigstens zwei flachseitigen Zellen der zusammengesetzten Tankvorrichtung erstrecken,
(b) Vorsehen einer ersten Vielzahl von Steigleitungen (410), die mit dem oberen horizontalen fluidführenden Verteiler fluidverbunden sind und sich in die Nähe des oberen Endes der oberen Kappe jeder Zelle in der Anordnung von Zellen der Tankvorrichtung erstrecken, um einen Flusspfad von dem oberen Ende jeder Zelle in den oberen horizontalen fluidführenden Verteiler vorzusehen,
(c) Vorsehen einer zweiten Vielzahl von Steigleitungen (430), die mit dem unteren horizontalen fluidführenden Verteiler fluidverbunden sind und sich in die Nähe des unteren Endes der unteren Kappe jeder Zelle in der Anordnung von Zellen der zusammengesetzten Tankvorrichtung erstrecken, um einen Flusspfad von dem unteren Ende jeder Zelle in den unteren horizontalen fluidführenden Verteiler (310) vorzusehen,
(d) Vorsehen wenigstens einer dritten Steigleitung, die mit dem oberen horizontalen fluidführenden Verteiler fluidverbunden ist und sich durch einen Zugangsanschluss an der oberen Kappe oder unteren Kappe wenigstens einer der Zellen in der Anordnung von Zellen der zusammengesetzten Tankvorrichtung erstreckt,
(e) Vorsehen wenigstens einer vierten Steigleitung, die mit dem unteren horizontalen fluidführenden Verteiler fluidverbunden ist und sich durch einen Zugangsanschluss an der oberen Kappe oder unteren Kappe wenigstens einer der Zellen in der Anordnung von Zellen der zusammengesetzten Tankvorrichtung erstreckt, und
(f) Führen eines Fluids niedriger Dichte mit einem ersten spezifizierten Druck und einer ersten Temperatur in oder aus einem oberen Teil der zusammengesetzten Tankvorrichtung des ersten Aspekts durch die wenigstens eine dritte Steigleitung, während gleichzeitig ein Fluid höherer Dichte mit einer gleichen oder einer verschiedenen chemischen Zusammensetzung und mit einem zweiten spezifizierten Druck und einer zweiten Temperatur in oder aus dem unteren Teil der Zellen in der Anordnung von Zellen der zusammengesetzten Tankvorrichtung des ersten Aspekts durch die wenigstens eine vierte Steigleitung geführt wird, in einer derartigen Weise, dass ein gewünschtes Druck- und Temperaturregime in der zusammengesetzten Tankvorrichtung aufrechterhalten werden kann.

15. Zusammengesetzte Tankvorrichtung nach Anspruch 1, wobei die zusammengesetzte Tankvorrichtung als Teil einer Anlage vorgesehen ist, die eines der Folgenden ist:
a) eine Lagereinrichtung, die permanent oder temporär an einer fixen Position an Land vorgesehen ist,
b) ein transportabler ISO-Container,
c) ein Anhänger für einen Transport auf der Straße,
d) einen Güterwagon oder einen Treibstofftank für einen Transport auf der Schiene,
e) ein Fracht- oder Treibstoffbehälter in einem Boot oder Schiff.

16. Verfahren nach Anspruch 14, wobei die zusammengestellte Tankvorrichtung für das Lagern oder Transportieren von Fluiden, die aus LNG, NGL, NH₃, CO₂ und H₂ ausgewählt sind, als eines dichten Gases, einer Flüssigkeit oder in einer Schlämme von Molekülen gefangen verwendet wird.

17. Verfahren nach Anspruch 11, das das strukturelle Kombinieren aller Zellen in der Zellenanordnung für das Bilden eines primären Behälters der zusammengesetzten Tankvorrichtung umfasst, wobei einander entsprechende Durchgangslöcher in benachbarten, einander bündig kontaktierenden flachen Wandplattenteilen vorgesehen sind und ihre miteinander ausgerichteten Umfänge derart aneinander geschweißt oder geklemmt sind, dass sie strukturell einer relativen Bewegung standhalten und ein Lecken des Fluids aus dem Behälter verhindern.

18. Verfahren nach Anspruch 11, das das Fluidverbinden aller Zellen in einer integrierten Zellenanordnung, die einen primären Behälter der zusammengesetzten Tankvorrichtung bildet, umfasst, um interne Flusspfade von innerhalb der unteren Kappen und oberen Kappen und durch die flachen Wandplattenteile der Zellen der zusammengesetzten Tankvorrichtung zu bilden, wobei untere und obere Verteiler aufführende Steigleitungs- und abführende Steigleitungsabschnitte von nahe zu dem untersten inneren Punkt des unteren Endes jeder Zelle und zu dem höchsten inneren Punkt des oberen Endes jeder Zelle verbinden, wobei diese unteren und oberen Verteiler Steigleitungselemente umfassen, die eng die Haut wenigstens einer Zelle des zusammengesetzten Tanks penetrieren, um ein Einführen in und Ausführen aus dem primären Behälter des zusammengesetzten Tanks zu ermöglichen.

19. Verfahren nach Anspruch 11 für das Fluidverbinden aller Zellen in der Zellenanordnung, die den primären Behälter der zusammengesetzten Tankvorrichtung bildet, um interne Flusspfade von allen Teilen der zusammengesetzten Tankvorrichtung zu bilden, wobei die Ausrichtung der zusammengesetzten Tankvorrichtung mit einer transversalen Neigung vorgespannt ist, sodass die unteren Kappen aller ihrer Zellen jeweils einen definitiven unteren Punkt an oder in der Nähe des Einlasses einer an einem unteren Rohrverteiler oder einer seiner Verzweigungen angebrachten Steigleitung für das effektive Ein- oder Ausführen von flüssigen oder dichtphasigen Fluiden in den Tank oder einen definitiven hohen Punkt an oder in der Nähe des Einlasses einer an einem oberen Verteiler oder einer seiner Verzweigungen angebrachten Steigleitung für das effektive Ein- oder Ausführen von leichteren dichtphasigen oder gasförmigen Fluiden aufweisen.

## Revendications

1. Appareil de réservoir composite pour le confinement de fluide à des pressions allant de pressions égales ou proches de la pression ambiante à des pressions modérées, comprenant :
a) un réseau d'au moins deux cellules co-dépendantes à côtés plats (530, 531) présentant des parois de cellule à peau relativement mince réalisées en matériaux métalliques ou non métalliques, chacune des au moins deux cellules co-dépendantes à côtés plats présentant au moins deux parties de panneau de paroi plat reliées par des sections arrondies (140, 160) agencées de telle sorte que toutes les parties de panneau de paroi plat des au moins deux cellules co-dépendantes à côtés plats sont soit en contact affleurant avec des parties de panneau de paroi plat de cellules adjacentes parmi les au moins deux cellules co-dépendantes à côtés plats, soit en contact affleurant avec des panneaux de support plats d'une structure enveloppante (110, 170) enveloppant le réseau d'au moins deux cellules co-dépendantes à côtés plats, chacune des au moins deux cellules co-dépendantes à côtés plats présentant un fond supérieur et un fond inférieur reliés respectivement aux extrémités supérieures et inférieures des au moins deux parties de panneau de paroi plat comprenant des parois plates réunies par les sections arrondies ;
b) la structure enveloppante présentant une surface intérieure et une surface extérieure, la structure enveloppante étant configurée pour fournir une isolation vis-à-vis de l'environnement avec une résistance structurelle suffisante et avec une rigidité suffisante pour supporter des parties extérieures de panneau latéral plat des au moins deux cellules co-dépendantes à côtés plats en des parties extérieures du réseau d'au moins deux cellules co-dépendantes à côtés plats de telle sorte que, lorsqu'une pression interne est établie dans le réseau d'au moins deux cellules co-dépendantes à côtés plats à un niveau visé pour l'exploitation ou la survie, les au moins deux cellules co-dépendantes à côtés plats du réseau sont empêchées de subir une expansion excessive et de se déplacer ; et
**caractérisé en ce que** les au moins deux cellules co-dépendantes à côtés plats scellées les unes aux autres autour d'un périmètre d'au moins une paire correspondante de trous d'allègement traversant la paroi ménagés dans les parties de panneau de paroi plat en contact affleurant des cellules adjacentes parmi les au moins deux cellules co-dépendantes à côtés plats dans le réservoir composite, le périmètre de toutes les paires de trous d'allègement traversant la paroi étant suffisamment scellé pour résister structurellement à un mouvement relatif et empêcher une fuite de fluide hors du confinement.

2. Appareil de réservoir composite selon la revendication 1, dans lequel une ou plusieurs couches de matériau thermiquement isolant (120) revêtent une surface intérieure ou une surface extérieure de la structure enveloppante.

3. Appareil de réservoir composite selon la revendication 1 ou 2, comprenant en outre au moins une voie d'accès de fluide pour l'injection et le prélèvement de fluides, l'au moins une voie d'accès de fluide (150) comprenant un ou plusieurs conduits qui pénètrent dans les fonds supérieurs ou inférieurs d'une ou plusieurs des au moins deux cellules co-dépendantes à côtés plats pour rejoindre au moins un collecteur (180) qui s'étend horizontalement dans les cellules co-dépendantes et à travers des parois intérieures adjacentes du réseau des au moins deux cellules co-dépendantes à côtés plats, permettant l'injection et l'éjection simultanées de fluides.

4. Appareil de réservoir composite selon la revendication 1, dans lequel les parois de cellule sont choisies parmi des alliages d'acier ou des alliages d'aluminium, les parois de cellule présentant une épaisseur allant de typiquement bien moins d'environ 25,4 mm à environ 76,2 mm.

5. Appareil de réservoir composite selon la revendication 1, dans lequel les parois de cellule sont choisies parmi une feuille de caoutchouc artificiel imprégnée de fibres, une matrice fibre-résine ou des matériaux en ferrociment.

6. Appareil de réservoir composite selon la revendication 1, dans lequel le périmètre de toutes les paires de trous d'allègement traversants est scellé par un cordon de soudure continu reliant les paires adjacentes de parties de panneau de paroi plat en contact affleurant

7. Appareil de réservoir composite selon la revendication 1, dans lequel les au moins deux cellules co-dépendantes à côtés plats du réseau sont configurées pour être empêchées de se dilater et de se déplacer au-delà de limites qui induiraient des contraintes horizontales et verticales dépassant environ 95 % des valeurs de contrainte horizontale et verticale admissibles sous la pression de service.

8. Appareil de réservoir composite selon la revendication 1, configuré pour le stockage de fluides qui doivent être confinés à des températures s'écartant d'au moins 10 °C des conditions ambiantes normales.

9. Appareil de réservoir composite selon la revendication 1, comprenant une ou plusieurs voies d'accès de fluide, ouvertures ou conduits pour l'injection et le prélèvement de fluides.

10. Appareil de réservoir composite selon la revendication 8, dans lequel les voies d'accès de fluide comprennent un ou plusieurs conduits qui pénètrent dans les fonds supérieurs ou inférieurs d'une ou plusieurs des au moins deux cellules co-dépendantes à côtés plats constituant l'appareil de réservoir composite pour rejoindre des conduits qui s'étendent horizontalement dans les cellules co-dépendantes et à travers des parois intérieures adjacentes du réseau des au moins deux cellules co-dépendantes à côtés plats, permettant l'injection et l'éjection simultanées de fluides.

11. Procédé de fabrication d'un système de réservoir composite sensiblement métallique :
a) prévoir une pluralité de parties de panneau de paroi plat métalliques minces, une pluralité de sections arrondies métalliques et une pluralité de fonds métalliques supérieurs et inférieurs pour produire au moins deux cellules co-dépendantes à côtés plats à peaux relativement minces ;
b) fixer les parties de panneau plat aux bords tangents de la pluralité de sections arrondies pour former une pluralité de corps de cellule, et fixer la pluralité de fonds métalliques supérieurs et inférieurs à la pluralité de corps de cellule pour former les au moins deux cellules co-dépendantes à côtés plats à peaux relativement minces ;
c) agencer les au moins deux cellules co-dépendantes à côtés plats à peaux relativement minces de telle sorte que toutes les parties de panneau de paroi plat des au moins deux cellules co-dépendantes à côtés plats sont soit en contact affleurant les unes avec les autres, soit en contact affleurant avec des panneaux de support plats d'une structure enveloppante pour former un réseau enveloppé d'au moins deux cellules co-dépendantes à côtés plats ; et
d) la structure enveloppante présentant une surface intérieure et une surface extérieure, la structure enveloppante étant configurée pour fournir une isolation vis-à-vis de l'environnement avec une résistance structurelle suffisante et avec une rigidité suffisante pour supporter des parties extérieures de panneau latéral plat des au moins deux cellules co-dépendantes à côtés plats en des parties extérieures du réseau d'au moins deux cellules co-dépendantes à côtés plats de telle sorte que, lorsqu'une pression interne est établie dans le réseau d'au moins deux cellules co-dépendantes à côtés plats à un niveau visé pour l'exploitation ou la survie, les au moins deux cellules co-dépendantes à côtés plats du réseau sont empêchées de se dilater et de se déplacer dans une mesure telle que les contraintes résultantes dépassent les valeurs admissibles des codes applicables de récipients sous pression ou qu'une instabilité structurelle se produit
**caractérisé par** le scellement des au moins deux cellules co-dépendantes à côtés plats les unes aux autres autour d'un périmètre d'au moins une paire correspondante de trous d'allègement traversant la paroi ménagés dans des paires adjacentes des parties de panneau de paroi plat en contact affleurant des au moins deux cellules co-dépendantes à côtés plats dans le réservoir composite, le périmètre de toutes les paires correspondantes de trous d'allègement traversant la paroi étant suffisamment scellé pour résister structurellement à un mouvement relatif et empêcher une fuite de fluide hors du confinement.

12. Procédé selon la revendication 11, comprenant en outre de prévoir une ou plusieurs voies d'accès dans la pluralité de parties de panneau de paroi plat métalliques minces.

13. Procédé selon la revendication 11 ou 12, comprenant en outre de prévoir une ou plusieurs traversées dans la pluralité de fonds métalliques supérieurs et inférieurs.

14. Procédé pour faire s'écouler un fluide dans les parties supérieures et les parties inférieures, et pour en extraire un fluide identique ou différent, d'un réseau d'au moins deux cellules à côtés plats d'un appareil de réservoir composite selon la revendication 1 pour le confinement de fluide, l'appareil de réservoir composite présentant des trous d'allègement traversant la paroi dans des parties de panneau de paroi plat adjacentes de toutes les cellules adjacentes du réseau d'au moins deux cellules à côtés plats, les cellules présentant chacune un fond supérieur (140) et un fond inférieur (160), **caractérisé par** le procédé comprenant :
(a) prévoir des collecteurs horizontaux supérieur et inférieur d'acheminement de fluide (310) qui s'étendent intérieurement à travers les trous d'allègement traversants (210) dans des parties de panneau de paroi plat adjacentes de toutes les cellules adjacentes du réseau d'au moins deux cellules à côtés plats constituant l'appareil de réservoir composite ;
(b) prévoir une première pluralité de colonnes montantes (410) reliées fluidiquement au collecteur horizontal supérieur d'acheminement de fluide et s'étendant depuis celui-ci jusqu'à proximité d'une partie supérieure du fond supérieur de chaque cellule dans le réseau de cellules constituant l'appareil de réservoir, fournissant un chemin d'écoulement depuis la partie supérieure de chaque cellule jusque dans le collecteur horizontal supérieur d'acheminement de fluide ;
(c) prévoir une deuxième pluralité de colonnes montantes (430) reliées fluidiquement au collecteur horizontal inférieur d'acheminement de fluide et s'étendant depuis celui-ci jusqu'à proximité d'une partie inférieure du fond inférieur de chaque cellule dans le réseau de cellules constituant l'appareil de réservoir composite, fournissant un chemin d'écoulement depuis la partie inférieure de chaque cellule jusque dans le collecteur horizontal inférieur d'acheminement de fluide (310) ;
(d) prévoir au moins une troisième colonne montante reliée fluidiquement au collecteur horizontal supérieur d'acheminement de fluide et s'étendant depuis celui-ci jusqu'à et à travers un raccord de voie d'accès sur le fond supérieur ou le fond inférieur d'au moins une des cellules du réseau de cellules constituant l'appareil de réservoir composite ;
(e) prévoir au moins une quatrième colonne montante reliée fluidiquement au collecteur horizontal inférieur d'acheminement de fluide et s'étendant depuis celui-ci jusqu'à et à travers un raccord de voie d'accès sur le fond supérieur ou le fond inférieur d'au moins une des cellules du réseau de cellules constituant l'appareil de réservoir composite ; et
(f) faire s'écouler un fluide de faible densité à une première pression spécifiée et à une première température dans ou hors d'une partie supérieure de l'appareil de réservoir composite du premier aspect à travers l'au moins une troisième colonne montante, tout en faisant s'écouler un fluide de densité supérieure de composition chimique identique ou différente et à une deuxième pression spécifiée et à une deuxième température simultanément dans ou hors de la partie inférieure des cellules du réseau de cellules constituant l'appareil de réservoir composite du premier aspect à travers l'au moins une quatrième colonne montante, d'une manière qui permet de maintenir un régime de pression et de température visé dans l'appareil de réservoir composite.

15. Appareil de réservoir composite selon la revendication 1, dans lequel l'appareil de réservoir composite est construit en tant que partie d'une installation choisie parmi :
a) une installation de stockage fixée à demeure ou temporairement en place à terre,
b) un conteneur ISO transportable ;
c) une remorque pour le transport routier ;
d) un wagon de fret ferroviaire ou un tender ferroviaire à carburant pour le transport ferroviaire ;
e) un confinement de cargaison ou de carburant dans ou sur une barge ou un navire.

16. Procédé selon la revendication 14, dans lequel l'appareil de réservoir composite est utilisé pour stocker ou transporter des fluides choisis parmi le GNL, les LGN, NH₃, CO₂ et H₂, sous forme de gaz dense, de liquide, ou capturés dans une suspension de molécules.

17. Procédé selon la revendication 11, comprenant de combiner structurellement toutes les cellules du réseau cellulaire pour établir un confinement primaire de l'appareil de réservoir composite, dans lequel des trous traversant la paroi correspondants sont ouverts dans des parties de panneau de paroi plat adjacentes en contact affleurant et leurs périmètres alignés sont soudés ou bridés ensemble d'une manière qui résiste structurellement à un mouvement relatif et empêche une fuite de fluide hors du confinement.

18. Procédé selon la revendication 11, comprenant de relier fluidiquement toutes les cellules d'un réseau cellulaire intégré comprenant un confinement primaire de l'appareil de réservoir composite pour établir des chemins d'écoulement internes depuis l'intérieur des fonds inférieurs et des fonds supérieurs et à travers les parties de panneau de paroi plat des cellules de l'appareil de réservoir composite, avec des collecteurs inférieur et supérieur reliant des tronçons de tuyau de colonne montante d'aspiration et de colonne descendante depuis à proximité du point interne le plus bas de la partie inférieure de chaque cellule et du point interne le plus haut de la partie supérieure de chaque cellule, dans lequel ces collecteurs inférieur et supérieur comprennent des éléments de colonne montante qui traversent étroitement la peau d'au moins une cellule du réservoir composite pour permettre l'injection dans le confinement primaire du réservoir composite et l'extraction depuis celui-ci.

19. Procédé selon la revendication 11 pour relier fluidiquement toutes les cellules du réseau cellulaire comprenant le confinement primaire de l'appareil de réservoir composite afin d'établir des chemins d'écoulement internes depuis toutes les parties de l'appareil de réservoir composite, dans lequel l'orientation de l'appareil de réservoir composite est établie de manière privilégiée selon une inclinaison transversale telle que les fonds inférieurs de toutes ses cellules présentent chacun un point bas défini au niveau ou à proximité de l'entrée d'une colonne montante fixée à un collecteur de tuyauterie inférieur ou à l'une de ses branches, afin de remplir et de vidanger efficacement le réservoir de liquides ou de fluides en phase dense, et un point haut défini au niveau ou à proximité de l'entrée d'une colonne montante fixée à un collecteur supérieur ou à l'une de ses branches, afin de remplir et de purger efficacement le réservoir de fluides en phase dense plus légers ou gazeux.
